# EUROPÄISCHE PATENTSCHRIFT

(11) **EP 2 414 494 B1**
(45) Veröffentlichungstag und Bekanntmachung des Hinweises auf die Patenterteilung: **24.07.2013**
(21) Anmeldenummer: 10714577.3
(22) Anmeldetag: 01.04.2010
(51) Int. Cl.: C10L 5/44, C10L 9/08, C10B 53/02

(54) **VERFAHREN ZUR HYDROTHERMALEN KARBONISIERUNG NACHWACHSENDER ROHSTOFFE UND ORGANISCHER RESTSTOFFE**
METHOD FOR HYDROTHERMALLY CARBONIZING RENEWABLE RAW MATERIALS AND ORGANIC RESIDUAL PRODUCTS
PROCÉDÉ DE CARBONISATION HYDROTHERMALE DE MATIÈRES PREMIÈRES RENOUVELABLES ET DE RÉSIDUS ORGANIQUES

(30) Priorität: 01.04.2009 DE 102009015257; 23.12.2009 DE 102009060542
(43) Veröffentlichungstag der Anmeldung: 08.02.2012
(73) Patentinhaber: SunCoal Industries GmbH, 14974 Ludwigsfelde (DE)
(72) Erfinder: WOLF, Bodo, M., 87719 Mindelheim (DE); WITTMANN,Tobias, 10961 Berlin (DE); VON OLSHAUSEN, Christian, 10115 Berlin (DE)
(74) Vertreter: Henrion, Oliver
(86) Internationale Anmeldenummer: PCT/EP2010/002104
(87) Internationale Veröffentlichungsnummer: WO 2010/112230

(56) Entgegenhaltungen:
- DE-A1-102007 062 809
- US-A- 5 354 345

## Beschreibung

Die Erfindung betrifft ein Verfahren zur hydrothermalen Karbonisierung von nachwachsenden Rohstoffen und organischen Reststoffen.

Nachwachsende Rohstoffe und organische Reststoffe, die in dem erfindungsgemäßen Verfahren eingesetzt werden können, werden im Weiteren mit den Begriffen Einsatzstoff oder Biomasse bezeichnet. Unter Einsatzstoff oder Biomasse soll vorliegend pflanzliche und tierische Biomasse sowie Stoffwechselprodukte verstanden werden, insbesondere nachwachsende Rohstoffe wie Holzhackschnitzel, Grünschnitt aus der Landschaftspflege, Pflanzen, Stroh, Silage und organische Reststoffe aus der Land- und Forstwirtschaft sowie der Nahrungsmittelindustrie und Entsorgungswirtschaft, sowie auch Torf, Rohbraunkohle, Papier- und Klärschlämme, Trester und dergleichen, die im weiteren auch als Einsatzstoffe bezeichnet werden.

Die Einsatzstoffe werden durch hydrothermale Karbonisierung im Wesentlichen zu Humus, Kohle, Dünger, Wasser und CO₂ umgesetzt.

Hinsichtlich des erfindungsgemäßen Verfahrens soll sich der Begriff "Einsatzstoff' im Wesentlichen auf den typischen Zustand, z.B. den jeweiligen Umsetzungsgrad, des Einsatzstoffs in der jeweiligen Prozessstufe bzw. -schritt beziehen.

Das Anwendungsgebiet der Erfindung ist die energetische Nutzung nachwachsender Rohstoffe, die Verwertung von Reststoffen aus der land-, forst- und nahrungswirtschaftlichen Produktion und von organischen Wertstoffen aus der Abfallaufbereitung und die Herstellung von Bodenverbesserem.

Beim Stand der Technik wird die meiste Biomasse des natürlichen zyklischen Kohlenstoffkreisprozesses verrottet oder umweltbelastend kompostiert und so weitgehend einer höherwertigen stofflichen und energetischen Nutzung entzogen. Industrielle Prozesse zur Umwandlung der Einsatzstoffe in Humus und Kohle durch hydrothermale Karbonisierung in der Massenproduktion sind nicht Stand der Technik, obwohl die wissenschaftlichen Grundlagen für die Umwandlung dieser Einsatzstoffe in Kohle 1913 von Bergius veröffentlicht wurden.

Vorhanden sind wissenschaftliche Grundlagen für die Umwandlung der Einsatzstoffe, wie Holz, Stroh, Gras, Grünschnitt, Landschaftspflegeholz, Schlempe, Gärreste, Maissilage, Ganzpflanzensilage und organischer Abfall, aber auch Torf und Rohbraunkohle durch Dehydratation (Abspaltung von Wasser) bei Temperaturen zwischen 180°C und 300°C in Anwesenheit von flüssigem Wasser in kohlenstoffreiche und sauerstoffarme Feststoffe. Danach muss während der Reaktion der Druck mindestens dem Sattdampfdruck des Reaktionsgemisches bei der gewählten Reaktionstemperatur entsprechen oder darüber liegen. In Abhängigkeit der verwendeten Einsatzstoffe ist das Erreichen einer Mindesttemperatur erforderlich, um die Reaktion in Gang zu setzten. Diese beträgt etwa 180°C für zuckerreiche Einsatzstoffe und liegt bei bis zu 220°C für cellulose- und ligninreiche Einsatzstoffe. Die Dehydratation ist eine Zeitreaktion, die zuerst sehr schnell und dann immer langsamer stattfindet, bis ein Gleichgewichtszustand erreicht ist. In der Regel sind, je nach den gewünschten Produkteigenschaften, Verweilzeiten zwischen 30 Minuten und über 12 Stunden erforderlich.

Parallel zur Dehydratationsreaktion findet eine Decarboxylierung statt, die zu einer Abspaltung von überwiegend CO₂ führt. Dies führt zu einer Bildung von (Permanent)Gasen während der Reaktion. Bei niedrigen Temperaturen dominiert die Dehydratation, bei hohen Temperaturen dominiert die Decarboxylierung. Je höher also die Temperatur gewählt wird, desto mehr Kohlenstoff wird in Form von CO₂ abgespalten und geht als Gas verloren. Gleichzeitig sinkt die Ausbeute des Feststoffes. Durch eine Erhöhung der Temperatur kann jedoch die Verweilzeit verringert werden, da sowohl die Dehydratation als auch die Decarboxylierung schneller ablaufen. Weiterhin kann durch eine Erhöhung der Temperatur die bei maximaler Verweilzeit erreichbare Produktqualität (hoher Massenanteil an Kohlenstoff und/oder geringer Massenanteil an Sauerstoff) verbessert werden. Während bei Temperaturen von z.B. etwa 200°C ein maximaler Kohlenstoffanteil von ca. 70% erreichbar ist, kann bei Temperaturen von z.B. etwa 300°C ein maximaler Kohlenstoffanteil von ca. 80% erreicht werden.

Neben der Dehydratation und der Decarboxylierung findet noch eine Reihe von Nebenreaktionen statt, die dazu führen, dass sich unter anderem wasserlösliche Kohlenwasserstoffe bilden. Einige dieser wasserlöslichen Kohlenwasserstoffe bilden anschließend wieder einen kohlenstoffreichen Feststoff, sie sind also Zwischenprodukte der Dehydratationsreaktion. Ein Anteil der wasserlöslichen Kohlenwasserstoffe sind organische Säuren, deren Bildung zu einer Absenkung des pH-Wertes führt. Wird die hydrothermale Karbonisierung bei niedrigen Temperaturen durchgeführt, ist der überwiegende Anteil der flüssigen Phase sehr leicht biologisch abbaubar. Wird die hydrothermale Karbonisierung bei hohen Temperaturen durchgeführt, so steigt der Anteil schwer biologisch abbaubarer Kohlenwasserstoffe in der flüssigen Phase, was zu erhöhten Entsorgungskosten führen kann.

Die Dehydratisierung und Decarboxylierung können jeweils durch die Zugabe geeigneter Katalysatoren begünstigt werden. Somit kann bereits bei geringerer Temperatur und reduzierter Reaktionsdauer der erwünschte Umsetzungsgrad erreicht werden. Beispiele für wirksame Katalysatoren sind u.a. organische Säuren wie z.B. Zitronensäure. Weiterhin wirken einige Metalle, deren Salze und Oxide katalytisch aktiv in der hydrothermalen Karbonisierungsreaktion. Ein Teil der katalytisch wirksamen Substanzen sind bereits in verschiedenen Einsatzstoffen enthalten und werden so in den Prozess eingebracht. Andere können zur Optimierung der Reaktion entweder den Einsatzstoffen vor Eintritt in den Reaktor zugesetzt oder während des laufenden Betriebs in den Reaktor eingebracht werden. In einigen Fällen kann der Katalysator nach der Umsetzung nicht wiedergewonnen werden (z.B. Zitronensäure) oder wird während der Reaktion zersetzt (z.B. Ameisensäure). Insoweit kann die Bezeichnung pKatalysator" nicht im strengen Wortsinn angewandt werden. Diese Hilfsstoffe beschleunigen die Reaktion und reduzieren die eingangs erwähnte, erforderliche Starttemperatur, weswegen wesentliche Eigenschaften eines Katalysators allerdings zutreffend sind.

Eine Auswahl von Katalysatoren sind:
1) Anorganische Bronstedsäuren: HNO₃, HCl
2) Organische Brønstedsäuren: Ameisensäure, Essigsäure, Citronensäure, NH4Cl
3) Lewissäuren wie z.B. Metallhalogenide: FeCl₃, FeBr₃, AlCl₃, AlBr₃
4) Allgemein Metallhalogenide und -oxide: NaCl, FeO, Fe₂O₃, LiCl, [Fe(NH₄)₂(SO₄)₂]•6 H₂O
5) saure Zeolite, z.B. H-ZSM-5

Obwohl die Karbonisierungsreaktion auch ohne Katalysator stattfindet, ist die gezielte Wahl eines passenden Katalysatorsystems für eine optimale Prozessführung vorteilhaft, um eine sinnvolle Kombination aus Reaktionstemperatur und Verweilzeit in Verbindung mit einer hohen Ausbeute, optimierter Kohlenstoffbilanz sowie guten Produkteigenschaften einzustellen. Zudem kann die Anpassung des Katalysators die Qualität des Nebenproduktes Prozesswasser entscheidend beeinflussen, wobei das Ziel ein einleitfähiges Wasser mit geringer Schadstofffracht darstellt.

Die Dehydratation und Decarboxylierung von Biomasse ist ein in Summe exothermer Prozess, bei dem Wärme abgeführt werden muss.

Eine der ersten technischen Umsetzungen der Dehydratation von Industrieschlempen in Druckreaktoren bei 250°C - 300°C aus der ZeNstoffindustrie wurden von Friedrich Bergius 1921 beschrieben (AT86234).

US-A-5 354 345 offenbart ein kontinuierliches Verfahren zur hydrothermalen Carbonisierung von unter anderem Biomasse, bei dem der Einsatzstoff in einem aufrecht stehenden zylindrischen Reaktor in einem Wasserbad unter Druck carbonisiert wird, wobei Wasser und CO₂ abgespalten werden. Der Einsatzstoff wird von oben zugeführt und vollzieht eine schwerkraftbedingte vertikale Abwärtsbewegung in Richtung des am unteren Reaktorende befindlichen Ausgangs. Der Produktaustrag kann z.B. durch Förderschnecken erfolgen.

Weiterhin offenbart die US 3,552,031 eine Vorrichtung zur Abspaltung von Wasser aus organischem Material zusammen mit flüssigem Wasser am Beispiel von Braunkohle bei Temperaturen zwischen 100°C und 300°C in einem liegenden Druckreaktor, der durch eine Fördervorrichtung beschickt wird und an dessen Ende die dehydratisierte Kohle wieder abgezogen wird. Der Reaktor ist isoliert und wird von außen geheizt. Es werden jedoch keine Aussagen über die Führung der Wärmeströme getroffen, deren effiziente Führung einen bedeutenden Einfluss auf die Wirtschaftlichkeit des Verfahrens hat. Ein weiterer Nachteil ist die Fördereinrichtung im Inneren des Reaktors.

Auch die US 3,992,784 offenbart ein Verfahren zur Dehydratation von organischem Material zusammen mit flüssigem Wasser bei mehr als 150°C am Beispiel von Braunkohle. Die Braunkohle wird mit Wasser vermischt und mit Hilfe einer Pumpe in einen

Druckreaktor gefördert. Das Gemisch aus Wasser und Braunkohle wird durch Wärme-übertrager/-tauscher vorgewärmt, die die Wärme des aus dem Reaktor abgeführten Produkts nutzen. Die Erwärmung der Edukte erfolgt ausschließlich über einen indirekten Wärmeübergang in Wärmeübertragern/-tauschern. Die Verwendung von indirekten Wärmeübertragern zur Vorwärmung von Fest/Flüssiggemischen ist wegen der schlechten Wärmeübergangseigenschaften und der Tendenz zur Bildung von Anbackungen schwierig. Weiterhin ist der Trockner, der einen nicht zu unterschätzenden Wärmebedarf, hat nicht in die Wärmewirtschaft/-bilanz der Anlage eingebunden.

Die WO 2008081409 A2 offenbart ein Verfahren und eine Vorrichtung zur Dehydratation von Biomasse zusammen mit flüssigem Wasser bei Temperaturen über 150 °C in einem Druckreaktor, die im Wesentlichen aus einem Schlaufenreaktor besteht, in den das Ausgangsprodukt eingebracht wird. Das im Reaktor befindliche Reaktionsgemisch wird kontinuierlich umgewälzt und ein Teil aus dem Reaktor entnommen und anschließend getrocknet. Es werden weiterhin Nebenaggregate offenbart. Ein Nachteil dieser bekannten Lehre ist die komplette Umwälzung des Reaktorinhaltes. Hierdurch erreicht das Reaktionsgemisch nur eine mittlere Verweilzeit und es wird ein Anteil der Biomasse sofort nach dem Eintreten wieder aus dem Reaktor abgeführt, was die Produktqualität negativ beeinflusst. Weiterhin nachteilig ist, dass das Reaktionsgemisch aus dem Reaktor mit einem niedrigen Trockenstoffanteil ausgetragen wird, wodurch ebenfalls eine große Menge an heißem Reaktionswasser ausgetragen wird, welches zur Schließung der Wasserbilanz durch kälteres Wasser ersetzt werden muss.

Darüber hinaus offenbart die EP 1970431 A1 ein Verfahren und eine Vorrichtung zur Dehydratation von Biomasse zusammen mit flüssigem Wasser bei Temperaturen über 100 °C. Die Biomasse wird dabei ggf. vorgewärmt und mit einer Pumpe oder Schleuse in einen liegenden Druckreaktor eingebracht, durch den sie mit Hilfe eines Schneckenförderers bewegt wird. Der Druckreaktor ist extern beheizt. Die reagierte Biomasse wird am Ende des Druckreaktors entweder über eine Pumpe oder eine Druckschleuse ausgetragen. Ein Nachteil dieser Lehre ist die Verwendung eines Schneckenförderers, um den Reaktorinhalt durch den rohrförmigen Reaktor zu bewegen. Durch die hohen Temperaturen kommt es zu einem schnellen Verschleiß der Schnecke und wegen der hohen Drücke zu Schwierigkeiten bei der Abdichtung gegen den Atmosphärendruck.

Weiterhin offenbart die WO 2008095589 A1 einen S-förmigen Reaktor zur Dehydratation von Biomasse in flüssigem Wasser, der in einem Bad aus Thermalöl liegt, welches bei Bedarf gekühlt und geheizt werden kann. Ein Nachteil dieser Variante ist die schlechte Steuerbarkeit der Reaktorinnentemperatur.

Die WO 2008113309 A1 offenbart eine nasschemische Umwandlung von Biomasse unter der Erdoberfläche z.B. in Kohleschächten, wobei der statische Druck des Wassers, eine Erhitzung sich unterhalb von 200 m befindlichen Lagen auf über 200°C gestattet und so eine Dehydratationsreaktion ermöglicht. Der hier verfolgte Weg der technischen Umsetzung weißt Nachteile gegenüber einer sich an der Erdoberfläche befindlichen Anlage auf, da die Reaktionstemperatur nicht ohne weiteres kontrolliert werden kann und erforderliche Wartungsarbeiten nur schwerlich durchgeführt werden können.

Die noch nicht verbreitete Nutzung der Erkenntnisse von Bergius ist neben dem bis jetzt noch nicht gegebenen Handlungsbedarf zweifelsfrei auch durch den unbefriedigenden Stand bei der Überleitung der wissenschaftlichen Erkenntnisse der hydrothermalen Karbonisierung in industriell nutzbare Verfahrenstechnik und bei der Entwicklung der diesbezüglichen Vorrichtungen bedingt.

Das Ziel der Erfindung ist die Erschließung der Vielzahl denkbarer Einsatzstoffe durch Verbesserung des Standes der Technik bei der Umwandlung, insbesondere spezifisch großvolumiger organischer Einsatzstoffe, bevorzugt solcher mit hohem Wassergehalt, durch hydrothermale Karbonisierung, bei der die Einsatzstoffe durch Dehydratisierung und Decarboxylierung hauptsächlich in Kohle, Humus, Dünger, Wasser und CO₂, also in standardisierbare Wert-, Einsatz-, Hilfs- und Brennstoffe mit hohem Gebrauchswert, z.B. hoher Verbrennungswärme und niedrigem Wassergehalt umgewandelt werden.

Aufgabe der Erfindung ist es ein vereinfachtes kontinuierliches Verfahren zur hydrothermalen Karbonisierung von Biomasse zur Verfügung zu stellen, welches insbesondere eine hohe Effizienz in Bezug auf die Wärme- und Wasserwirtschaft des Prozesses erzielt.

### Erfindungsgemäß werden dazu insbesondere

- eine Druckerhöhung zum Zwecke des Einbringens der Einsatzstoffe in Druckgefäße,
- eine Anhebung der Kohlenstoffkonzentration der Einsatzstoffe in einem Wasserbad unter prozessbedingten Temperaturen und Drücken,
- eine mechanische Entwässerung und thermische Trocknung der karbonisierten Produkte und gegebenenfalls
- eine Rückgewinnung der mit den Rohstoffen eingetragenen pflanzlichen Nährstoffe und des Wassers
vorgeschlagen.

Die Aufgabe wird gelöst durch ein kontinuierliches Verfahren zur hydrothermalen Karbonisierung von Biomasse, worin
- in einer ersten Prozessstufe, der Druckerhöhung, der Druck des Einsatzstoffes im wesentlichen auf den Druck der nachfolgenden Prozessstufe von wenigstens 5 bar erhöht wird,
- der Einsatzstoff in einer zweiten Prozessstufe, der Karbonisierung, unter Abspaltung von im wesentlichen Wasser und Kohlenstoffdioxid bei einem Druck von mindestens 5 bar und maximal Siedetemperatur des Wassers in ein karbonisiertes Produkt umgewandelt wird,
- der Einsatzstoff in der zweiten Prozessstufe vor allem durch Schwerkraft im Wesentlichen vertikal transportiert wird,
- der (sich in Umwandlung befindliche) Einsatzstoff vorzugsweise im oberen Teil/Bereich der zweiten Prozessstufe durch Entnahme und teilweise wieder Zuführung von Wasser aus der bzw. in die zweite Prozessstufe vorzugsweise im wesentlichen senkrecht zur Hauptströmungsrichtung zwischen Edukteintrag und Produktaustrag umgewälzt wird,
- der (sich in Umwandlung befindliche) Einsatzstoff sich im unteren Teil/Bereich der zweiten Prozessstufe als wasserhaltiges Sediment absetzt,
- die Mindesthöhe des Sediments so gewählt wird, dass sich der Feststoffgehalt durch Sedimentation auf mindestens 15%, bevorzugt mindestens 20% weiter bevorzugt mindestens 25%, besonders bevorzugt mindestens 30% erhöht und die Maximalhöhe der Sedimentschicht so, z.B. durch Umwälzung und/oder Heizdampfzugabe, begrenzt wird, dass sich durch den statischen Druck kein fester Bodenkörper ausbildet,
- die Füllhöhe des Wasserstandes in der zweiten Prozessstufe geregelt wird durch die Entnahme und Zuführung von Wasser in die Prozessstufe,
- die in der zweiten Prozessstufe anfallenden Permanentgase im Gegenstrom zu dem in die zweite Prozessstufe eintretenden Einsatzstoff aus der zweiten Prozessstufe in der Art abgeführt werden, dass der enthaltene Wasserdampfanteil zumindest teilweise an dem im Verhältnis kälteren Einsatzstoff kondensiert und die Permanentgase erst danach aus dem Prozess abgeführt werden und
- das Sediment aus der zweiten Prozessstufe ausgetragen und durch im Wesentlichen Verdampfung von Wasser auf im Wesentlichen das Temperatumiveau einer dritten Prozessstufe, einer mit Dampf beheizten Trocknung, bei der die Trocknung in Dampfatmosphäre erfolgt, abgekühlt und dieser zugeführt und aus dieser als Endprodukt in Form von marktfähiger Kohle mit Wassergehalten von kleiner 30, bevorzugt kleiner 20, insbesondere kleiner 15 Masse-% ausgetragen wird.

Das wesentliche Wirkprinzip der vorliegenden Erfindung liegt in einer verfahrenstechnisch einfachen Ausführung bei gleichzeitig optimierter Energiebilanz, was durch einen erhöhten Feststoffproduktaustrag aus der zweiten Prozessstufe bei gleichzeitigem Erhalt einer möglichst großen Menge an erhitztem Wasser in der zweiten Prozessstufe und Vermeiden der Bildung eines festen Bodenkörpers gekoppelt mit einer Gewinnung der Abwärme aus der Rückkühlung des Sediments und der Trocknung in Form von Wasserdampf erreicht wird.

Das erfindungsgemäße kontinuierliche Verfahren zur hydrothermalen Karbonisierung der Einsatzstoffe kann vorteilhaft ausgestaltet werden, indem mindestens eine der nachfolgenden Maßnahmen ausgeführt wird:
- in der ersten Prozessstufe, der Druck des Einsatzstoffes im wesentlichen auf den Druck der nachfolgenden Prozessstufe von wenigstens 5 bar erhöht wird und die Temperatur des Einsatzstoffs durch dessen Vermischung mit im Verhältnis zur Temperatur des Einsatzstoffs heißerem Abwasser und/oder Abdampf aus den nachfolgenden Prozessstufen erhöht wird und zweckmäßig vor dem Eintrag des Einsatzstoffes in die zweite Prozessstufe maximal soviel Wasser wieder vom Einsatzstoff abgetrennt wird, wie zuvor zugeführt wurde und zweckmäßig von dem abgetrennten Wasser maximal soviel Wasser aus dem Prozess abgeführt wird, wie in den nachfolgenden Prozessstufen der Karbonisierung und Trocknung vom Einsatzstoff abgetrennt wird bzw. wurde und darüber hinaus in die erste Prozessstufe zugeführtes Wasser als Kreislaufwasser im Prozess verbleibt,
- der Einsatzstoff in der zweiten Prozessstufe durch Kondensation des in der Prozessstufe selbst entstehenden Wasserdampfes vorgewärmt und chemisch aufgeschlossen und in einem unter maximal Siedebedingungen arbeitendem Wasserbad mit einem Druck von mindestens 5 bar durch Abspaltung des chemisch gebundenen Wassers und Kohlenstoffdioxid in das karbonisierte Produkt umgewandelt wird,
- der Einsatzstoff in der zweiten Prozessstufe vor allem durch Schwerkraft im Wesentlichen vertikal transportiert wird,
- der (sich in Umwandlung befindliche) Einsatzstoff vorzugsweise im oberen Teil/Bereich der zweiten Prozessstufe durch Entnahme und teilweise wieder Zuführung von Wasser aus der bzw. in die zweite Prozessstufe vorzugsweise im wesentlichen senkrecht zur Hauptströmungsrichtung zwischen Edukteintrag und Produktaustrag umgewälzt wird,
- der (sich in Umwandlung befindliche) Einsatzstoff sich im unteren Teil der zweiten Prozessstufe als wasserhaltiges Sediment absetzt,
- die Mindesthöhe des Sediments so gewählt wird, dass sich der Feststoffgehalt durch Sedimentation auf mindestens 15%, bevorzugt mindestens 20% weiter bevorzugt mindestens 25%, besonders bevorzugt mindestens 30% erhöht und die Maximalhöhe der Sedimentschicht so, z.B. durch Umwälzung und/oder Heizdampfzugabe, begrenzt wird, dass sich durch den statischen Druck kein fester Bodenkörper ausbildet,
- die Füllhöhe des Wasserstandes in der zweiten Prozessstufe geregelt wird durch die Entnahme und Zuführung von Wasser in die Prozessstufe,
- das Wärmegleichgewicht der zweiten Prozessstufe durch die Wiederzuführung des für die Umwälzung entnommenen Wassers, welches bei einem Wärmebedarf in der zweiten Prozessstufe vorteilhaft außerhalb der zweiten Prozessstufe durch Zugabe von Heizdampf und/oder in einem Wärmetaucher erwärmt werden kann, falls erforderlich der Entnahme von Dampf und erforderlichenfalls durch Zugabe von externem Heizdampf, der in der Prozessstufe kondensiert, erhalten wird,
- in der zweiten Prozessstufe entstehender und nicht kondensierender überschüssiger Dampf aus der zweiten Prozessstufe entnommen und der zweiten Prozessstufe wieder zugeführt und/oder aus der zweiten Prozessstufe zum Zwecke der Nutzung vorzugsweise in einer anderen Prozessstufe abgeführt wird,
- die in der zweiten Prozessstufe anfallenden Permanentgase im Gegenstrom zu dem in die zweite Prozessstufe eintretenden Einsatzstoff aus der zweiten Prozessstufe in der Art abgeführt werden, dass der enthaltene Wasserdampfanteil zumindest teilweise am im Verhältnis kälteren Einsatzstoff kondensiert und die Permanentgase erst danach aus dem Prozess abgeführt werden,
- das Sediment aus der zweiten Prozessstufe ausgetragen und durch im Wesentlichen Verdampfung von Wasser auf im Wesentlichen das Temperatumiveau einer dritten Prozessstufe, einer mit Dampf beheizten Trocknung, bei der die Trocknung in Dampfatmosphäre erfolgt, abgekühlt und dieser zugeführt und aus dieser als Endprodukt in Form von marktfähiger Kohle mit Wassergehalten von kleiner 30, bevorzugt kleiner 20, insbesondere kleiner 15 Masse-% ausgetragen wird.

Im Folgenden werden bevorzugte Ausführungsformen der drei Prozessstufen beschrieben.

Bevorzugte Ausführungsformen der ersten Prozessstufe, der Druckerhöhung, sind: 1. Druckerhöhung des Einsatzstoffes zusammen mit einer Flüssigkeit und 2. Druckerhöhung des Einsatzstoffes zusammen mit einem Gas.

In der ersten bevorzugten Ausführungsform der ersten Prozessstufe, der Druckerhöhung des Einsatzstoffes zusammen mit einer Flüssigkeit, wird erfindungsgemäß die Förderfähigkeit des Einsatzstoffes in bezug auf die für den Druckaufbau eingesetzte Technologie, bevorzugt eine Kolbenpumpe, eine Exzenterschneckenpumpe, eine Zellradschleuse, eine Druckschleuse oder Drehkolbenpumpe, durch Auffüllen mindestens seines Lückenvolumens mit im Verhältnis zur Temperatur des Einsatzstoffs heißerem Abwasser aus den nachfolgenden Prozessstufen, verbessert. Durch die Wasserzugabe wird somit die Fließfähigkeit und die Kompressibilität bzw. Inkompressibilität des eingesetzten Einsatzstoffes verbessert. Die Wasserzugabe erfolgt erfindungsgemäß vor der Erhöhung des Druckes auf den Druck der nachfolgenden Prozessstufe, welcher technisch Sinnvollerweise bei wenigstens 5 bar liegt. Die Menge des zugeführten Wassers wird so gewählt, dass die Förderfähigkeit mit der gewählten Technologie gewährleistet werden kann. Vorzugsweise ist mehr Wasser zuzuführen als die technisch bedinge Mindestmenge, um den Verschleiß zu minimieren. Der Trockenstoff-Anteil (TS Anteil) bei der Druckerhöhung ist vorzugsweise kleiner als 25% und größer als 2%, weiter bevorzugt kleiner als 15% und größer als 5%. Durch den Einsatz von heißem Abwasser aus den nachfolgenden Prozessstufen kann die fühlbare Wärme des heißen Abwassers an den Einsatzstoff übertragen und somit die Energieeffizienz verbessert werden. Zur weiteren Erhöhung der Temperatur kann zusätzlich Abdampf aus den nachfolgenden Prozessstufen, der an dem im Verhältnis kälteren Einsatzstoff kondensiert, zugegeben werden. Durch den Einsatz von heißem Abdampf aus den nachfolgenden Prozessstufen kann sowohl die fühlbare als auch die latente Wärme des heißen Abdampfes an den Einsatzstoff übertragen und somit die Energieeffizienz weiter verbessert werden.

Vorzugsweise erfolgt die Zugabe des Abdampfes vor der Zugabe des Abwassers. Die Temperatur des Einsatzstoffes wird technisch sinnvoll durch die Zugabe von Abwasser und/oder Abdampf nur soweit erhöht, dass es zu keiner übermäßigen Bildung von Brüden kommt und ist durch die Siedebedingungen begrenzt. Vorzugsweise beträgt die Temperatur des Einsatzstoffs nach der Wasser- und Dampfzugabe mehr als 60°C und weniger als 100°C, weiter bevorzugt mehr als 80°C und weniger als 100°C, besonders bevorzugt mehr als 90°C und weniger als 100°C. Nachdem der derart aufgefüllte Einsatzstoff mit Druck beaufschlagt wurde, wird das zugegebene Abwasser und/oder der zugegebene, kondensierte Abdampf unmittelbar vor dem Eintritt des Einsatzstoffes in die zweite Prozessstufe zumindest teilweise wieder vom Einsatzstoff abgetrennt, um die zweite Prozessstufe nicht mit einer zu großen Menge an in Verhältnis zur Reaktionstemperatur kälterem Wasser zu beladen. Von dem abgetrennten Wasser wird zweckmäßig maximal soviel aus dem Prozess abgeführt, wie in den nachfolgenden Prozessstufen (Karbonisierung und Trocknung) von dem Einsatzstoff abgetrennt wurde. Somit entspricht die zwischen der ersten und zweiten Prozessstufe aus dem Prozess abgeführte Wassermenge zweckmäßig maximal der Differenz zwischen der mit dem Einsatzstoff in die erste Prozessstufe eingetragenen und der mit dem Endprodukt ausgetragenen Wassermenge. Das nicht abgeführte Wasser verbleibt üblicherweise als Kreislaufwasser im Prozess.

In der zweiten bevorzugten Ausführungsform der ersten Prozessstufe, der Druckerhöhung des Einsatzstoffes zusammen mit einem Gas, wird erfindungsgemäß durch eine periodisch arbeitende Druckschleuse, die mindestens aus einer Niederdruck- und einer Hochdruckschleuse besteht, realisiert. Dabei ist die Taktung der Schleuse so zu gestalten, dass
- in einem ersten Takt die Niederdruckschleuse, die im Regelbetrieb vor ihrer Entspannung mit einem Gemisch aus Wasserdampf und Permanentgasen gefüllt ist, so gegen den Atmosphärendruck entspannt wird, dass der Wasserdampfanteil des Gasdampfgemischs zumindest teilweise am (für die Druckerhöhung vorbereiten) Einsatzstoff kondensiert und die verbleibende Gasphase separat gewonnen und aus dem Prozess abgeführt werden kann,
- in einem zweiten Takt der so vorgewärmte Einsatzstoff in die geöffnete Niederdruckschleuse bevorzugt durch die Schwerkraft befördert und diese dann verriegelt wird,
- in einem dritten Takt die Hochdruckschleuse, die im Regelbetrieb vor ihrer Entspannung mit einem Gemisch aus Wasserdampf und Permanentgasen gefüllt ist, so in die Niederdruckschleuse entspannt wird, dass der Wasserdampfanteil des Gasdampfgemisches zumindest teilweise am, sich in der Niederdruckschleuse befindenden, Einsatzstoff kondensiert,
- in einem vierten Takt der so mit Druck beaufschlagte und weiter vorgewärmte Einsatzstoff von der geöffneten Niederdruckschleuse in die geöffnete Hochdruckschleuse bevorzugt durch die Schwerkraft befördert und diese dann verriegelt wird,
- in einem fünften Takt die Hochdruckschleuse mit einem Gasdampfgemisch aus der zweiten Prozessstufe so bespannt wird, dass der Wasserdampfanteil des Gasdampfgemisches zumindest teilweise am, sich in der Hochdruckschleuse befindenden, Einsatzstoff kondensiert und dieser mit im Wesentlichen dem Druck der zweiten Prozessstufe beaufschlagt wird und
- in einem sechsten Takt der so mit Druck beaufschlagte und weiter vorgewärmte Einsatzstoff aus der geöffneten Hochdruckschleuse in die zweite Prozessstufe bevorzugt durch die Schwerkraft befördert und diese dann verriegelt wird.

Vorzugsweise ist zwischen dem vierten und fünften Takt Heizdampf so in die Hochdruckschleuse einzubringen, dass dieser am Einsatzstoff kondensiert und dadurch die Temperatur des Einsatzstoffes auf im Wesentlichen das Temperaturniveau der zweiten Prozessstufe erhöht wird, wodurch sich der Druck ebenfalls an das Druckniveau der zweiten Prozessstufe angleicht. Durch diese Maßnahme werden die, während des fünften Taktes auftretenden, Druckschwankungen in der zweiten Prozessstufe reduziert. Vorzugsweise ist weiterhin zwischen dem zweiten und dritten Takt Abdampf aus einer der nachgelagerten Prozessstufen so in die Niederdruckschleuse einzubringen, dass er am Einsatzstoff kondensiert und dadurch die Temperatur des Einsatzstoffes erhöht wird. Durch diese Maßnahme wird die zur Vorwärmung des Einsatzstoffes erforderliche Heizdampfmenge reduziert. Vorzugsweise ist darüber hinaus die Temperatur des Einsatzstoffes vor dem ersten Takt durch die Vermischung des Einsatzstoffes mit im Verhältnis zur Temperatur des Einsatzstoffs heißerem Abwasser aus den nachfolgenden Prozessstufen und/oder mit Abdampf aus den nachfolgenden Prozessstufen, der an dem kälteren Einsatzstoff kondensiert, zu erhöhen. Die Zugabe von Abwasser und/oder Abdampf ist genauso vorzunehmen, wie in der ersten bevorzugten Ausführungsform der ersten Prozessstufe beschrieben. Das hinzugefügte Abwasser und der kondensierte Abdampf werden jedoch vor der Druckerhöhung weitgehend wieder vom Einsatzstoff abgetrennt. Von dem abgetrennten Wasser wird maximal soviel aus dem Prozess abgeführt, wie in den nachfolgenden Prozessstufen (Karbonisierung und Trocknung) von dem Einsatzstoff abgetrennt wird bzw. wurde. Somit entspricht die zwischen der ersten und zweiten Prozessstufe aus dem Prozess abgeführte Wassermenge maximal der Differenz zwischen der mit dem Einsatzstoff in die erste Prozessstufe eingetragenen und der mit dem Endprodukt ausgetragenen Wassermenge. Das nicht abgeführte Wasser verbleibt üblicherweise als Kreislaufwasser im Prozess.

Die bevorzugte Ausführungsform der zweiten Prozessstufe, die Karbonisierung, in der der Einsatzstoff unter Abspaltung von im wesentlichen chemisch gebundenem Wasser und Kohlenstoffdioxid bei einem Druck von mindestens 5 bar und maximal Siedewassertemperatur in ein karbonisiertes Produkt umgewandelt wird, kann erfindungsgemäß im wesentlichen in drei Prozessschritte unterteilt werden, wobei
- im ersten Prozessschritt, der Vorwärmung, der Einsatzstoff insbesondere auf die erforderliche Reaktionstemperatur durch Kondensation des in der zweiten Prozessstufe selbst entstehenden Wasserdampfes und ggf. der Zugabe von Heizdampf und/oder durch die Zugabe von aus der zweiten Prozessstufe entnommenen, außerhalb der zweiten Prozessstufe aufgewärmten und rückgeführten Wasser vor- bzw. aufgewärmt wird,
- im zweiten Prozessschritt, der Karbonisierung, vorteilhaft die im ersten Prozessschritt erreichte Temperatur, insbesondere Reaktionstemperatur, gehalten wird und der Einsatzstoff in einem maximal unter Siedebedingungen arbeitendem Wasserbad mit einem Druck von mindestens 5 bar durch Abspaltung von vorwiegend chemisch gebundenem Wasser und Kohlenstoffdioxid reagiert und
- im dritten Prozessschritt, der Sedimentation, sich der (reagierende) Einsatzstoff als wasserhaltiges Sediment absetzt bzw. man absetzen läßt.

Der Stofftransport in der zweiten Prozessstufe erfolgt vorteilhaft vor allem durch Schwerkraft, d.h. bei einem stehenden Reaktor im Wesentlichen vertikal, wodurch sich eine Hauptströmungsrichtung vom Edukteintrag zum Produktaustrag am Reaktor in die dritte Prozessstufe, die Trocknung, ergibt.

Die Temperatur des in den ersten Prozessschritt der zweiten Prozessstufe eintretenden Einsatzstoffes entspricht im Wesentlichen der in der ersten Prozessstufe durch Vorwärmung erreichten Temperatur. Die Temperatur des Einsatzstoffes wird im ersten Prozessschritt der zweiten Prozessstufe durch die Kondensation, von dem, im zweiten Prozessschritt der zweiten Prozessstufe, entstehenden Wasserdampf sowie, falls erforderlich, durch die Zugabe von Heizdampf und/oder durch die Zugabe von aus der zweiten Prozessstufe entnommenem, außerhalb der zweiten Prozessstufe bevorzugt durch die direkte Zugabe von Heizdampf oder in einem Wärmetauscher aufgewärmten und rückgeführten Wasser auf die Temperatur des zweiten Prozessschritts der zweiten Prozessstufe erhöht.

Die Temperatur im zweiten Prozessschritt der zweiten Prozessstufe entspricht mindestens der für die Umsetzung des gewählten Einsatzstoffes erforderlichen Mindesttemperatur, welche aus der Literatur entnommen oder nach den dort beschriebenen Experimenten ermittelt werden kann. Sie kann zur Beschleunigung der Umwandlung auch darüber gewählt werden. Bevorzugt liegt die Temperatur zwischen 150°C und 250°C, weiter bevorzugt zwischen 180°C und 230°C. Der Druck der zweiten Prozessstufe entspricht mindestens dem Sattdampfdruck der mit der Temperatur des zweiten Prozessschrittes korrespondiert oder liegt darüber. Bevorzugt herrschen im zweiten Prozessschritt nahezu Siedebedingungen.

Im zweiten Prozessschritt reagiert der Einsatzstoff unter Abspaltung von im Wesentlichen chemisch gebundenem Wasser und Kohlenstoffdioxid. Dabei kann die Temperatur durch die in Summe exotherme Karbonisierungsreaktion lokal über die Siedetemperatur ansteigen, wodurch Wasserdampf entsteht, der aufsteigt und vorzugsweise im ersten Prozessschritt wieder kondensiert. Als energetisch vorteilhaft an der erfindungsgemäßen Verfahrensführung erweist sich, dass das Kondensat aus dem ersten Prozessschritt (Vorwärmung) dem zweiten Prozessschritt (Karbonisierung) der zweiten Prozessstufe wieder zufließt.

Erfindungsgemäß kann das Wärmegleichgewicht des zweiten Prozessschrittes der zweiten Prozessstufe durch die Entnahme und Wiederzuführung von Wasser, welches bei einem Wärmebedarf im zweiten Prozessschritt der zweiten Prozessstufe vorteilhaft außerhalb der zweiten Prozessstufe durch Zugabe von Heizdampf oder in einem Wärmetaucher erwärmt werden kann, falls erforderlich der Entnahme von Dampf und erforderlichenfalls durch direkte Zugabe von externem Heizdampf, der in der Prozessstufe kondensiert, erhalten werden.

Der sich in Umwandlung befindliche Einsatzstoff setzt sich erfindungsgemäß im dritten Prozessschritt der zweiten Prozessstufe als wasserhaltiges Sediment ab. Durch den Aufbau einer Sedimentschicht wird eine Aufkonzentration von Feststoff erreicht und somit sichergestellt, dass ein erhöhter Feststoffproduktaustrag aus der zweiten Prozessstufe bei gleichzeitigem Erhalt einer möglichst großen Menge an erhitztem Wasser in der zweiten Prozessstufe erreicht wird. Sinnvollerweise beträgt die Höhe der Sedimentschicht mindestens 0,5 Meter, bevorzugt 1 Meter, weiter bevorzugt mindestens 2 Meter um eine ausreichende Aufkonzentration an Feststoff zu erreichen.

Weiterhin wird durch den Aufbau einer Sedimentschicht sichergestellt, dass das aus der zweiten Prozessstufe ausgetragene Produkt eine Mindestqualität aufweist, da sich der Einsatzstoff während der Zeit in der er den dritten Prozessschritt durchläuft, prozessbedingten Temperaturen und Drücken ausgesetzt ist und damit einer Karbonisierung unterzogen wird und ausgeschlossen ist das er kurz nach seinem Eintritt in die zweite Prozessstufe wieder aus dieser ausgetragen wird. Über die Höhe der Sedimentschicht kann somit erfindungsgemäß eine Mindestverweilzeit eingestellt und damit eine Mindestproduktqualität erreicht werden. Bevorzugt beträgt die Mindestverweilzeit des Einsatzstoffes im dritten Prozessschritt zwischen 30 und 180 Minuten weiter bevorzugt zwischen 40 und 120 Minuten besonders bevorzugt zwischen 50 und 90 Minuten.

Da in den dritten Prozessschritt kein direkter Wärmeeintrag über eine Zugabe von Heizdampf oder aufgeheiztem Kreislaufwasser erfolgen kann, da dies die Sedimentschicht stören würde, kühlt die Sedimentschicht bedingt durch Wärmeverlust an die kältere Umgebung langsam ab. In einer bevorzugten Ausführungsform wird deshalb die Temperatur der zweiten Prozessstufe so gewählt, dass auch in der dritten Prozessstufe noch prozessbedingte Temperaturen vorherrschen und eine Karbonisierung stattfindet. In einer anderen bevorzugten Ausführungsform wird die dritte Prozessstufe indirekt von außen durch Wärmetauscher beheizt.

Zur Vermeidung der Bildung eines festen Bodenkörpers aus Sediment, welcher sich hindernd auf den Produktaustrag aus der zweiten Prozessstufe in die dritte Prozessstufe auswirken kann, wird die Höhe der Sedimentschicht und damit die Grenze zwischen dem zweiten und dem dritten Prozessschritt, die ohne eine Störung bedingt durch die Schwerkraft wächst, durch die Entnahme und zumindest teilweise Wiederzuführung von Wasser aus dem bzw. in den zweiten Prozessschritt begrenzt. Der Ort und die Art und Weise der Wasserentnahme ist vorzugsweise so gewählt, dass eine geringe Beladung mit Feststoff gewährleistet ist. Dies ist bei einem ideal, horizontal rotierendem Zylinder die Mitte des Zylinders. Die Feststoffrückhaltung kann durch den Einsatz von vorzugsweise Spaltsieben unterstützt werden. Die Wiederzuführung des Wassers wird vorteilhaft im Wesentlichen quer zur Hauptströmungsrichtung, d.h. von Edukteintrag zu Produktaustrag, der zweiten Prozessstufe, durchgeführt, um die vertikale Durchmischung des karbonisierenden Einsatzstoffes und damit eine Störung der erwünschten Sedimentschicht im dritten Prozessschritt gering zu halten. Im Falle eines stehenden Reaktors erfolgt somit eine im Wesentlichen horizontale Umwälzung.

Erfindungsgemäß wird der Wasserstand in der zweiten Prozessstufe zur Realisierung des zweiten Prozessschrittes der zweiten Prozessstufe durch Entnahme von Wasser oder ggf. auch durch Zuführung von Wasser, vorzugsweise Abwasser aus einer anderen Prozessstufe, in die zweite Prozessstufe geregelt. Die genannte Wasserentnahme oder -zufuhr ermöglicht eine besonders einfache Steuerung bzw. Kontrolle des Wasserstands. Der Druck des aus der zweiten Prozessstufe abgeführten und ihr nicht wieder zugeführten Wassers wird in einer bevorzugt Ausführungsvariante durch Flashverdampfung oder in einem Wärmetauscher auf annähernd Umgebungsdruck abgesenkt und das Wasser danach zweckmäßig der ersten Prozessstufe zugeführt oder aus dem Prozess abgeführt. Wird der zweiten Prozessstufe Wasser zugeführt, so wird bevorzugt heißes Abwasser aus der ersten oder dritten Prozessstufe eingesetzt, welches bevorzugt durch die Zugabe von Abdampf vorgewärmt wird, wodurch die Energieeffizienz verbessert wird.

Die in der zweiten Prozessstufe anfallenden Permanentgase werden im Gegenstrom zu dem in die zweite Prozessstufe eintretenden Einsatzstoff aus der zweiten Prozessstufe in der Art abgeführt, dass der enthaltene Wasserdampfanteil zumindest teilweise an dem, im Verhältnis kälteren, Einsatzstoff auskondensiert. Als energetisch vorteilhaft an der erfindungsgemäßen Verfahrensführung erweist sich, dass die latente Wärme des Wasserdampfanteils der Gasphase nicht aus der zweiten Prozessstufe abgeführt wird sondern zumindest teilweise durch Kondensation wiedergewonnen werden kann.

In der Kombination dieser bevorzugten Ausführungsform der zweiten Prozessstufe mit der ersten bevorzugten Ausführungsform der ersten Prozessstufe, der Druckerhöhung in Gegenwart einer Flüssigkeit, wird die Führung der Permanentgase bevorzugt so ausgestaltet, dass deren Wasserdampfanteil im ersten Prozessschritt der zweiten Prozessstufe auskondensiert und die Permanentgase zwischen dem ersten Prozessschritt der zweiten Prozessstufe und der ersten Prozessstufe aus dem Prozess abgeführt werden.

In der Kombination dieser bevorzugten Ausführungsform der zweiten Prozessstufe mit der zweiten bevorzugten Ausführungsform der ersten Prozessstufe, der Druckerhöhung in Gegenwart eines Gases, wird die Führung der Permanentgase bevorzugt so ausgestaltet, dass deren Wasserdampfanteil teilweise in der Hochdruckschleuse, teilweise in der Niederdruckschleuse und teilweise vor dem Eintrag des Einsatzstoffes in die Niederdruckschleuse an diesem auskondensiert und erst dort aus dem Prozess abgeführt wird.

Erfindungsgemäß wird das Druckniveau des aus der zweiten Prozessstufe ausgetragenen Sediments durch Entspannung und das Temperaturniveau des aus der zweiten Prozessstufe ausgetragenen Sediments durch die Verdampfung von Wasser auf im Wesentlichen das Druck- und Temperaturniveau der dritten Prozessstufe einer mit Dampf beheizten Trocknung, bei der die Trocknung in Dampfatmosphäre erfolgt (bevorzugt einer atmosphärischen Dampfwirbelschichttrocknung, einer druckaufgeladenen Dampfwirbelschichttrocknung, einer Wirbelschichttrocknungsanlage oder eine Dampffluidtrocknung) entspannt und dieser zugeführt und aus dieser als Endprodukt in Form von marktfähiger Kohle mit Wassergehalten von kleiner 30, bevorzugt keiner 20, insbesondere kleiner 15 Masse-% ausgetragen.

Die erfindungsgemäße Trocknung in Dampfatmosphäre ermöglicht, dass aus der Trocknung im wesentlichen Sattdampf (mit einem Permanentgasgehalt von typischerweise unter 5 Massen-%, bevorzugt unter 1 Massen-%) erhalten wird, der unter Wärmeabgabe kondensiert werden kann. Die Kondensation kann dabei direkt oder bevorzugt nach einer Kompression oder Entspannung erfolgen.

In einer bevorzugten Ausführungsform der Druck- und Temperaturabsenkung erfolgt diese gleichzeitig durch die Flashverdampfung eines Teils des mit dem Sediment aus der zweiten Prozessstufe ausgetragenen Wassers vorzugsweise an einer Drosselarmatur oder in einer periodisch arbeitenden Entspannungsschleuse. Als energetisch vorteilhaft an dieser bevorzugten Verfahrensführung erweist sich, dass die Menge des erzeugten Dampfes maximiert wird, da keine Verluste durch die Nutzung von Wärmetauschern entstehen.

In einer anderen bevorzugten Ausführungsform der Druck- und Temperaturabsenkung erfolgt zuerst die Temperaturabsenkung durch die Erwärmung und Verdampfung von Wasser besonders bevorzugt Heizdampfkondensat aus der Trocknung in einem Gegenstromwärmetauscher unmittelbar vor der Druckabsenkung welche vorzugsweise in einer Entspannungsschleuse, Zellradschleuse oder Drossel realisiert wird. Als energetisch vorteilhaft an dieser bevorzugten Verfahrensführung erweist sich, dass im Wärmetauscher sowohl Dampf als auch, falls dies zur Schließung der Wasserbilanz der zweiten Prozessstufe erforderlich ist, heißes Wasser gewonnen werden kann und dieses dann, soweit es zur Schließung der Wasserbilanz erforderlich ist, der zweiten Prozessstufe zugeführt werden kann.

In einer bevorzugten Ausführungsform der Absenkung des Temperaturniveaus des aus der zweiten Prozessstufe ausgetragenen Sediments wird der Dampf der bei der Absenkung des Temperaturniveaus des aus der zweiten Prozessstufe ausgetragenen Sediments erzeugt wird auf zwei Druckniveaus gewonnen, wobei das erste Druckniveau im Wesentlichen dem Druckniveau des für die Beheizung des Trockners erforderlichen Heizdampfs und das zweite Druckniveau im Wesentlichen dem Druckniveau des Trockners entspricht. Der im Wesentlichen auf dem Druckniveau des Heizdampfs für den Trockner gewonnene Dampf kann dann zur Beheizung des Trockners eingesetzt werden. Wird der im Wesentlichen auf dem Druckniveau des Heizdampfs für den Trockner gewonnene Dampf durch Flashverdampfung gewonnen, so wird dieser entweder isotherm mit Heizdampfkondensat aus der Trocknung gewaschen und erst dann zur Beheizung des Trockners eingesetzt oder in einem Wärmetauscher unter Erzeugung von Frischdampf kondensiert und der gewonnene Frischdampf zur Beheizung des Trockners eingesetzt. Bei der Nutzung eines Wärmetauschers ist zu beachten, dass Druckniveau des Flashdampf etwa über dem Druckniveau des Heizdampfs für den Trockner liegt, um die erforderlichen Wärmetauscherflächen zu reduzieren. Sollte der bei der Temperaturabsenkung des aus der zweiten Prozessstufe ausgetragenen Sediments erzeugte Dampf aufgrund der verfahrenstechnischen Umsetzung der Druck- und Temperaturabsenkung zum Beispiel in einer Entspannungsschleuse nicht kontinuierlich sondern periodisch anfallen, so ist durch eine zweckmäßige Dampfspeicherung bevorzugt einen Rootsspeicher eine Egalisierung des Dampfmassenstroms zu gewährleisten.

Gemäß einer bevorzugten Ausführungsform der dritten Prozessstufe, besteht diese aus der mit Dampf beheizten Trocknung in Dampfatmosphäre sowie einer vorgeschalteten mechanische Entwässerung bevorzugt einer Zentrifuge, Bandpresse, Filterpresse oder Kolbenpresse. In einer bevorzugten Ausführungsform arbeitet die mechanische Entwässerung auf im Wesentlichen dem Druckniveau der Trocknung, wodurch bedingt die Druck- und Temperaturabsenkung des aus der zweiten Prozessstufe abgeführten Sediments vor der mechanischen Entwässerung erfolgt und die mechanische Entwässerung nur niedrigen Druck- und Temperaturanforderungen standhalten muss. Dabei wird nur das bei der mechanischen Entwässerung anfallende Konzentrat in die mit Dampf beheizte Trocknung in Dampfatmosphäre eingebracht und das Filtrat bevorzugt zur Schließung der Wasserbilanz der zweiten Prozessstufe eingesetzt, weiterhin bevorzugt der ersten Prozessstufe vor der Druckerhöhung zugeführt und nach Abgabe eines Teiles seiner fühlbaren Wärme vor der zweiten Prozessstufe wieder abgeführt und/oder bevorzugt einer Aufbereitung bevorzugt einer biologischen Aufbereitung ggf. mit einer vorgelagerten Nassoxidation oder gewünschtenfalls direkt einer Verwertung, gegebenenfalls nach Aufkonzentration durch Verdunstung oder Eindampfung, zugeführt. In einer zweiten bevorzugten Ausführungsform arbeitet die mechanische Entwässerung auf im Wesentlichem dem Druck der zweiten Prozessstufe wobei das aus der zweiten Prozessstufe abgeführte Sediment zuerst in ein Konzentrat und Filtrat zerlegt wird und diese beiden Ströme separat weiter geführt werden. Das Konzentrat wird unter Verdampfung von Restwasser auf im Wesentlichen das Druck- und Temperaturniveau der mit Dampf beheizten Trocknung, bei der die Trocknung in Dampfatmosphäre erfolgt, gebracht (wie weiter oben für das Sediment beschrieben) und dieser zugeführt. Das Filtrat, welches bei hohem Druck und hoher Temperatur anfällt, kann bevorzugt zur Schließung der Wasserbilanz der zweiten Prozessstufe eingesetzt werden und der dafür nicht erforderliche Anteil vor dessen Rückkühlung bevorzugt einer thermischen Aufbereitung, bevorzugt einer Nassoxidation, zugeführt werden und danach durch die Verdampfung von Wasser, z.B. durch Flashverdampfung oder in einem Wärmetauscher, zurückgekühlt und auf Umgebungsdruck entspannt werden und bevorzugt einer Aufbereitung bevorzugt einer biologischen Aufbereitung oder gewünschtenfalls direkt einer Verwertung, gegebenenfalls nach Aufkonzentration durch Verdunstung oder Eindampfung, zugeführt werden.

Gemäß einer bevorzugten Ausführungsform arbeitet die dampfbeheizte Trocknung in Dampfatmosphäre bei im Wesentlichem Umgebungsdruck, wodurch vorteilhaft eine verfahrenstechnisch einfache Trocknungstechnologie zum Einsatz kommen kann. Gemäß einer anderen bevorzugten Ausführungsform arbeitet die dampfbeheizte Trocknung in Dampfatmosphäre im Überdruck, wobei das Druckniveau der Trocknung vorteilhaft so gewählt wird, dass das Druckniveau des für die Beheizung der zweiten Prozessstufe eingesetzte Heizdampfs im Wesentlichen dem Druckniveau des für die Beheizung des Trockners erforderlichem Heizdampfs entspricht, wobei die Temperaturdifferenz zwischen der Heizdampftemperatur des zur Beheizung des Trockners eingesetzten Dampfs und der Trocknungstemperatur bevorzugt zwischen 20K und 70K weiter bevorzugt zwischen 30K und 60K beträgt.

Die erfindungsgemäße Verfahrensführung über die drei Prozessstufen (Druckanhebung, Karbonisierung, Trocknung) ermöglicht es, die Prozessabwärme aus der zweiten und dritten Prozessstufe zum überwiegenden Teil in Form von Sattdampf zu gewinnen was sich besonders vorteilhaft auf die Möglichkeit der Nutzung dieser Prozessabwärme auswirkt. Unter Prozessabwärme wird insbesondere verstanden:
- Dampf der bei der Temperaturabsenkung des aus der zweiten Prozessstufe entnommenen und dieser nicht wieder zugeführten Wassers gewonnen wird,
- Dampf der bei der Temperaturabsenkung des aus der zweiten Prozessstufe abgeführten wasserhaltigen Sediments gewonnen wird, falls keine oder eine mechanisch Entwässerung bei Umgebungsdruck erfolgt,
- Dampf der bei der separaten Temperaturabsenkung des bei der mechanischen Entwässerung von aus der zweiten Prozessstufe abgeführtem Sediment gewonnenen Filtrats und Konzentrats gewonnen wird, falls die mechanische Entwässerung auf dem Druckniveau der zweiten Prozessstufe erfolgt und
- Dampf der bei der Trocknung in Dampfatmosphäre gewonnen wird.

Dieser Dampf wird in einer bevorzugten Ausführungsform vor einer weiteren Nutzung isotherm mit Heizdampfkondensat aus der Trocknung gewaschen, wodurch flüchtige organische Verbindungen und Staub abgeschieden werden können. Bevorzugt wird der pH-Wert der Wäsche so angepasst, dass eine weitgehende Reinigung erfolgt.

In einer anderen bevorzugten Ausführungsform wird dieser Dampf in Wärmetauschern kondensiert und so Frischdampf erzeugt. Beim Einsatz von Wärmetauschern ist zu beachten, dass die Temperatur und damit auch der Druck des zu kondensierenden Dampfes oberhalb der Temperatur und damit dem Druck des zu erzeugenden Dampfes liegen müssen um einen effektiven Wärmeübergang zu gewährleisten. Soweit im Text von "im Wesentlichen" dem gleichen Druckniveau gesprochen wird, ist damit auch die für den Wärmeübergang erforderliche Druckdifferenz gemeint.

In einer bevorzugten Ausführungsform wird der gewaschene Dampf bzw. der Frischdampf komprimiert oder in einem Kraftprozess unter Abgabe von technischer Arbeit entspannt, wobei die Druckstufen der Kompression zweckmäßig bestimmt werden von dem für die Beheizung des Trockners und für die Beheizung der zweiten Prozessstufe erforderlichen

Druckniveaus. In einer anderen bevorzugten Ausführungsform wird der Dampf unter Abgabe von Wärme kondensiert und diese Wärme bevorzugt zu Heizzwecken genutzt. In einer weiteren bevorzugten Ausführungsform wird der Heizdampf zur Beheizung des Trockners und ggf. der zur Beheizung der zweiten Prozessstufe erforderliche Heizdampf aus einer Gegendruckturbine einen Dampfkraftprozesses ausgekoppelt, wobei das Druckniveau der Auskopplung im Wesentlichem dem Druckniveau des für die Beheizung des Trockners erforderlichen Heizdampfs entspricht und erforderlichenfalls dem Druckniveau das zur Beheizung der zweiten Prozessstufe erforderlich ist entspricht und der in der zweiten und dritte Prozessstufe gewonnene Abdampf unter Abgabe von Wärme kondensiert und diese vorzugsweise zur Speisewasservorwärmung, in den Dampfkraftprozess eingekoppelt wird.

Zur weiteren Verbesserung der Wärme- und Wasserbilanz des Verfahrens wird vorteilhaft das ggf. in der isothermen Wäsche der Flash- und Trocknungsdämpfe anfallende Wasser, das ggf. in der mechanischen Entwässerung abgetrennte Prozesswasser und das ggf. bei der Erzeugung von Frischdampf anfallende Kondensat, ggf. nach vorgeschalteter Reinigung von Verunreinigungen, wie Stäuben, entweder der ersten Prozessstufe vor der Druckerhöhung zugeführt und nach Abgabe eines Teiles seiner fühlbaren Wärme vor der zweiten Prozessstufe wieder abgeführt und danach einer Aufbereitung oder gewünschtenfalls direkt einer Verwertung, gegebenenfalls nach Aufkonzentration durch Verdunstung oder Eindampfung, zugeführt und die ggf. abgetrennten Verunreinigungen aus dem Prozess abgeführt.

Der wirtschaftliche Vorteil der Erfindung ist eine optimierte Energie- und minimale Wasserbilanz der hydrothermalen Karbonisierung, die resultiert aus der erfindungsgemäßen Verfahrensführung, die bei einer hochwertigen, für die Substitution von fossiler Kohle erforderlichen, marktüblichen Qualität des Endprodukts zusätzlich die Nutzung der anfallenden Abwärme bevorzugt intern für die Produkttrocknung und ggf. die Aufheizung der Einsatzstoffe mit Hilfe der Dampfkompression nach dem Wärmepumpenprinzip, oder bevorzugt extern durch Expansion des Dampfes auf Umgebungstemperaturniveau, z.B. zum Zwecke der Gewinnung von Elektroenergie aus dem Prozessabdampf oder bevorzugt extern durch Kondensation zur Bereitstellung von Heizwärme, erzielt.

Das Endprodukt des erfindungsgemäßen Verfahrens kann z.B. in Form von marktfähiger Kohle mit Wassergehalten von kleiner 30, bevorzugt kleiner 20 Masse-%, vorzugsweise kleiner 15 Masse-% vorliegen.

Die Erfindung bezieht sich auch auf Kombinationen von bevorzugten Ausgestaltungen, soweit diese sich nicht gegenseitig ausschließen.

Die Erfindung soll anhand der folgenden Beispiele erläutert werden, ohne jedoch auf die speziell beschriebenen Ausführungsformen beschränkt zu sein.

### Ausführungsbeispiel

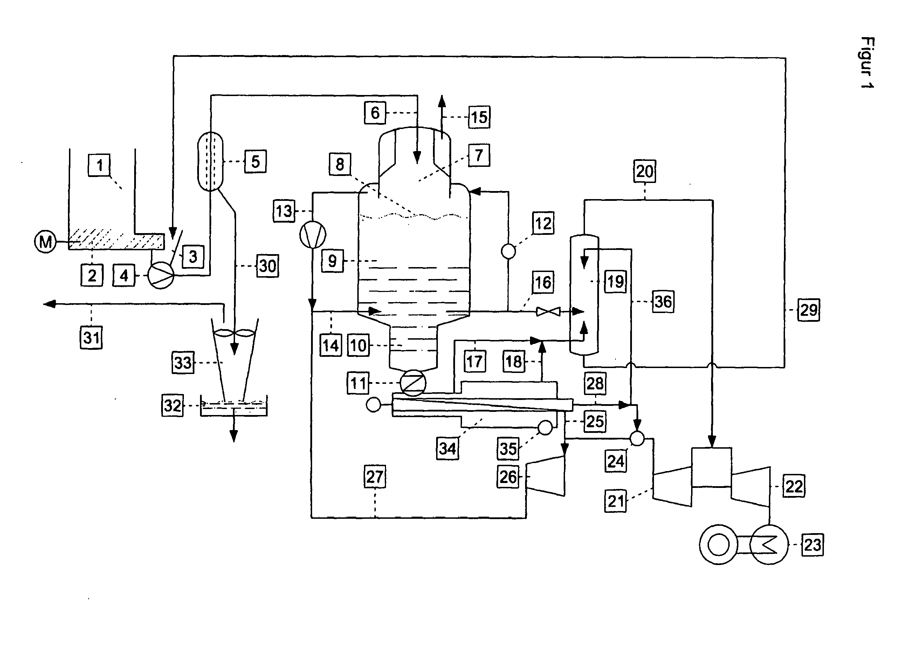

Die Erfindung wird mithilfe von Figur 1 an einem Ausführungsbeispiel wie folgt beschrieben:

Der Einsatzstoff sollen Holzhackschnitzel mit einem Trockengutanteil von 50 Masse-% und einer Kantenlänge von maximal 30 x 20 x 20 mm sein.

Dem Schüttgutsilo 1 werden 2000 kg/h Holzhackschnitzel, entsprechend einer Energieleistung von 5155 kW, über die Fördereinrichtung 2 mit Umgebungstemperatur entnommen und der ersten Prozessstufe, bestehend aus dem Aufgabetrichter 3, der Dickstoffpumpe 4 und der Wasserabtrennung 5, zugeführt.

Die Pumpfähigkeit des Einsatzstoffes wird hergestellt, indem das Lückenvolumen des Einsatzstoffes mit 2000 kg/h prozessinternem Abwasser 29, das der isothermen - Dampfwäsche 19 entnommen wurde, im Aufgabetrichter 3 aufgefüllt wird. Der Feststoffanteil des Einsatzstoffes vor der Pumpe 4 sinkt damit auf 25 Masse-%. Der Einsatzstoff wird so auf eine Temperatur von mehr als 50 °C vorgewärmt.

Die Dicktstoffpumpe 4 hebt den Druck des Einsatzstoff-Wassergemisches auf 25 bar und fördert dieses zum ersten Prozessschritt 7 der zweiten Prozessstufe über die Wasserabscheidung 5, in der ca. 1300 kg/h Prozesswasser 30 abgeschieden und aus dem Prozess, z.B. unter Gewinnung der im Prozess gelösten Nährstoffe des Einsatzstoffes als Dünger 32, über eine Eindickung 33, die durch Abgabe von Brüden 31 erreicht wird, abgeführt werden.

Über die Schüttgutaufgabe 6 gelangt der vorgewärmte Einsatzstoff mit einem Feststoffgehalt von 37 Masse-% in den ersten Prozessschritt 7 der zweiten Prozessstufe, die unter einem Druck von 20 bar arbeitet und in der der Feststoff mitgeführtes Wasser abgibt, das dem zweiten Prozessschritt 9 der zweiten Prozessstufe zufließt und in dem der Einsatzstoff durch aus dem zweiten Prozessschritt 9 der zweiten Prozessstufe aufsteigenden und kondensierenden Sattdampf auf die für hydrothermale Karbonisierung erforderliche Temperatur, in diesem Beispiel 210 °C, erwärmt wird.

Der im ersten Prozessschritt 7 der zweiten Prozessstufe vorgewärmte Einsatzstoff bildet eine Schüttschicht 8, die durch Schwerkraft in das Wasserbad des zweiten Prozessschrittes 9 der zweiten Prozessstufe sinkt, wo er unter einem Druck von 20 bar und Siedetemperatur des Wassers unter Abscheidung des größten Teiles seines chemisch gebundenen Wassers und Bildung von Permanentgasen, wie Kohlendioxid, die über 15 aus dem Prozess abgeführt werden, unter Abgabe von Wärme karbonisiert wird.

Das karbonisierte Produkt setzt sich im dritten Prozessschritt 10 als Sediment ab und wird von dort über 11 mechanisch und geregelt unter Flashverdampfung eines Teiles des Sedimentwassers in den Trockner 34 ausgetragen.

Der Wärmehaushalt der zweiten Prozessstufe wird unter annähernd isothermen Reaktionsbedingungen im zweiten Prozessschritt aufrechterhalten durch die Entnahme von Prozesswasser 16 aus dem zweiten Prozessschritt, durch die Zirkulation 13 und die Zugabe von Dampf 27 über die Dampfzuführung 14 und die Zirkulation von Prozesswasser 12 mit Siedetemperatur.

Das über 11 aus der zweiten Prozessstufe in die Trocknung 34 der dritten Prozessstufe geförderte Sediment wird dort indirekt mithilfe dampfbeheizter Flächen, unter Bildung von Heizdampfkondensat 28, unter geringem Überdruck in einer Dampfatmosphäre getrocknet. Die beim Sedimentaustrag 11 und bei der Trocknung 34 entstehenden Sattdämpfe 17 und 18 sowie der Flashdampf des aus der zweiten Prozessstufe über 16 entnommene Wassers werden in der Dampfwäsche 19 isotherm bei geringem Überdruck mit dem bei der Trocknung anfallenden Heizdampfkondensat 36 oder Prozesswasser 16 gewaschen.

Der mit einem Druck von etwas mehr als Umgebungsdruck anfallende gewaschene Dampf 20 wird in 21 auf den für die Realisierung der dritten Prozessstufe erforderlichen Heizdampfdruck komprimiert, durch Einspritzung von Heizdampfkondensat in 24 auf im Wesentlichen Sattdampfbedingungen zurückgekühlt und danach den Heizflächen der Trocknung über 25 zugeführt.

Für die Realisierung der dritten Prozessstufe nicht benötigter Flashdampf kann erfindungsgemäß in einer Expansion 22 unter Abgabe von technischer Arbeit auf Umgebungstemperaturniveau entspannt und in einer Kondensation 23 verflüssigt und danach dem Prozess entweder wieder zugeführt oder aus dem Prozess abgeführt werden, wobei das hier abgeführte Wasser den Wasseraustrag über 30 entsprechend reduziert.

Bei bestehendem Heizbedarf in der zweiten Prozessstufe kann erfindungsgemäß in 21 komprimierter Dampf nach der Rückkühlung in 24 einer zweiten Kompressionsstufe 26 zugeführt und dort auf den für die Einspeisung in die zweite Prozessstufe über 14 erforderlichen Druck komprimiert werden.

Im Beispiel ist das Endprodukt ein Braunkohlebrennstaub ähnliches Produkt, das über 35 aus dem Prozess mit einem Massestrom von ca. 700 kg/h, Wassergehalt von ca. 15 Masse-% und einem Heizwert von 4.925 kW ausgetragen wird.

Der energetische Wirkungsgrad der chemischen Umwandlung beträgt im Beispiel mehr als 95 %.

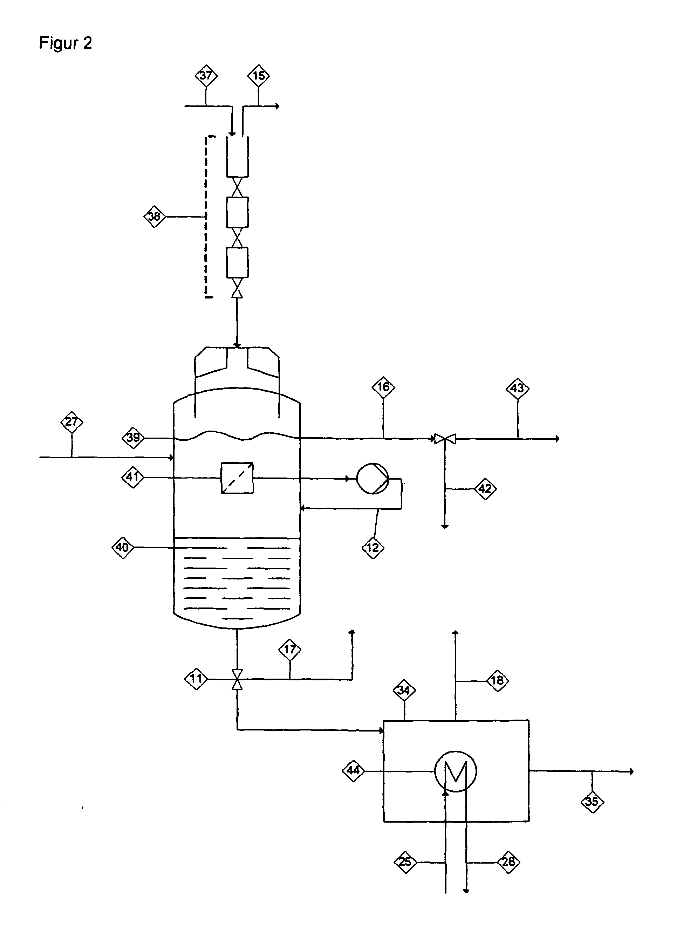

Die Erfindung wird mithilfe von Figur 2 an einem zweiten Ausführungsbeispiel wie folgt beschrieben:

Der Einsatzstoff soll eine Mischung aus Gras und Laub aus der Landschaftspflege mit einem Trockengutanteil von 40 Masse-% und einer Länge von maximal 20 mm sein.

1 t/h des Einsatzstoffes 37 (0,4 t/h Trockengut und 0,6 t/h Wasser) wird kontinuierlich bei Umgebungstemperatur der ersten Prozessstufe bestehend aus einer Einrichtung zur Druckerhöhung, in diesem Beispiel einer zweistufigen Druckschleuse 38, die aus einer Vorlage für den Einsatzstoff, sowie einer Niederdruckschleuse, einer Hochdruckschleuse und drei Schleusenarmaturen besteht, zugeführt.

Die Druckschleuse 38 arbeitet periodisch und hebt den Druck des Einsatzstoffs auf 18 bar, wobei der Einsatzstoff 37 durch die Schwerkraft von der Vorlage in die erste Niederdruckschleuse, von der Niederdruckschleuse in die Hochdruckschleuse und von dort direkt in die zweite Prozessstufe, bestehend aus einem vertikal stehend Reaktionsbehälter, transportiert wird.

Der Einsatzstoff wird von oben in die zweite Prozessstufe die unter einem Druck von 18 bar arbeitet und in der der Feststoff mitgeführtes Wasser abgibt, eingebracht, dort durch die Zugabe von 0,3 t/h Heizdampf über 27 auf die für die hydrothermale Karbonisierung erforderliche Temperatur, in diesem Beispiel 190°C, vorgewärmt.

Der Einsatzstoff sinkt bedingt durch die Schwerkraft in das Wasserbad 39 ein, wo er unter einem Druck von 18 bar und maximal Siedetemperatur des Wassers unter Abscheidung von 0,04 t/h chemisch gebundenem Wasser und Bildung von 0,04 t/h Permanentgasen, wie Kohlendioxid, die über 15 aus dem Prozess abgeführt werden, unter Abgabe von Wärme karbonisiert und sich als Sediment 40 absetzt.

Das Sediment 40 wird mit einem Feststoffgehalt von 30% (0,32 t/h Feststoff und 0,75 t/h Wasser) aus der zweiten Prozessstufe über 11 mechanisch und geregelt unter Flashverdampfung eines Teiles des Sedimentwassers 17 (0,17 t/h) ausgetragen, wodurch sich der Feststoffanteil auf etwa 36% erhöht und in den Trockner 34 der dritten Prozessstufe eingetragen.

Das Wärmegleichgewicht der zweiten Prozessstufe wird aufrechterhalten durch die Entnahme von Prozesswasser über eine Entnahmevorrichtung mit Feststoffrückhalt 41 dessen Zirkulation 12 und Wiedereinbringung, durch die Zugabe von Heizdampf 27 und der Abfuhr von Wasser über 16.

Die Einbringung des Heizdampfes 27 und des Zirkulationswassers 12 erfolgt tangential so dass der obere Teil/Bereich der zweiten Prozessstufe im Wesentlichen horizontal umgewälzt wird und so die Höhe des Sediments 40 so begrenzt wird, dass sich kein fester Bodenkörper bildet. Gleichzeitig wird durch das erfindungsgemäße Zulassen einer Sedimentation der Feststoffgehalt am Sedimentaustrag 11 auf etwa 30 Massen-% erhöht, so dass eine große Menge an heißem Wasser in der zweiten Prozessstufe verbleit, die das Wasserbad 39 bildet in dem die Karbonisierung stattfindet und nur das nicht mit dem Sediment ausgetragene jedoch zusammen mit dem Einsatzstoff oder als Heizdampf in die zweite Prozessstufe eingetragene und das vom Einsatzstoff in der zweiten Prozessstufe abgespaltene chemisch gebundene Wasser (zusammen etwa 0,19 t/h) über 16 aus der zweiten Prozessstufe abgeführt und unter Abgabe von Flashdampf 42 geregelt entspannt und für eine weitere Nutzung als entspanntes Prozesswasser (43) zur Verfügung steht. Das Wasserbad hat oberhalb der Sedimentschicht in diesem Beispiel einen Feststoffgehalt von unter 10 Massen-%, was eine gute Umwälzbarkeit gewährleistet. An diesem Beispiel wird deutlich, dass das erfindungsgemäße Zulassen des Aufbaus einer Sedimentschicht zu einer erheblichen Aufkonzentration an Feststoff am Sedimentaustrag führt und dadurch ein Großteil des Prozesswassers in der zweiten Prozessstufe gehalten werden kann. Der Aufbau des Sediments führt weiterhin dazu, dass der Einsatzstoff eine Mindestdauer, in diesem Beispiel von 60 Minuten, in der zweiten Prozessstufe verweilt, so eine Mindestumsetzung stattfinden kann und eine Mindestproduktqualität, in diesem Fall ein Kohlenstoffanteil von mehr als 55 Massen-% garantiert ist.

Das über 11 aus der zweiten Prozessstufe in den Trockner 34 der dritten Prozessstufe geförderte Sediment wird dort indirekt mithilfe dampfbeheizter Flächen 44, unter Bildung von Heizdampfkondensat 28, unter geringem Überdruck in einer Dampfatmosphäre getrocknet und mit einem Wassergehalt von 10 Massen-% (0,32 t/h Feststoff und 0,04 t/h Wasser) über 35 aus dem Prozess ausgetragen. Dabei entstehen etwa 0,54 t/h Sattdampf 18. Die bei der Sedimententspannung 11 und Prozesswasserentspannung entstehenden Flashdämpfe 17 und 42 sowie der bei der Trocknung 34 entstehenden Dampf 18 werden als Sattdampf gewonnen, so dass deren latente Wärme direkt oder nach Kompression oder Entspannung durch Kondensation nutzbar gemacht und wieder in den Prozess eingekoppelt werden kann.

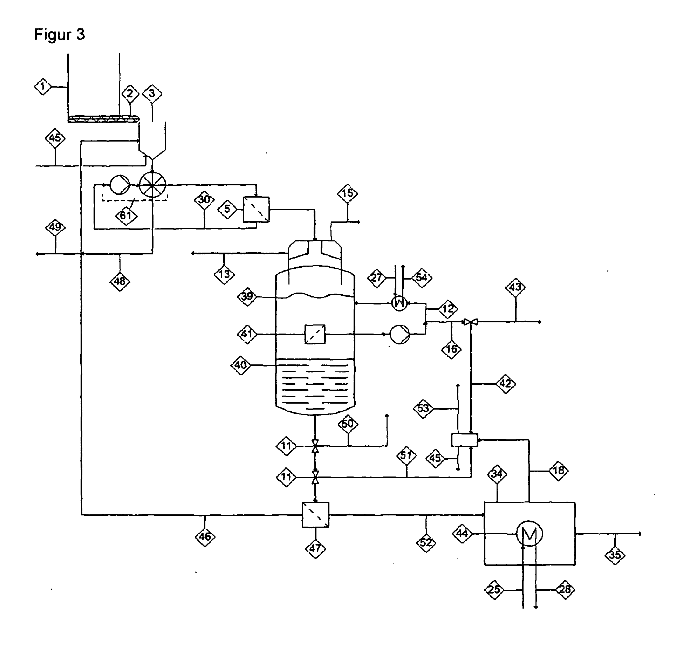

Die Erfindung wird weiterhin mithilfe von Figur 3 an einem dritten Ausführungsbeispiel wie folgt beschrieben:

Der Einsatzstoff sollen Holzhackschnitzel mit einem Trockengutanteil von etwa 50 Masse-% und einer Kantenlänge von maximal 60 x 60 x 60 mm sein.

Dem Schüttgutsilo 1 werden 2000 kg/h Holzhackschnitzel 37, entsprechend einer Energieleistung von 5.556 kW, über Fördereinrichtung 2 mit Umgebungstemperatur entnommen und der ersten Prozessstufe, bestehend aus dem Anmaischbehälter 3, der Einrichtung zur Druckerhöhung 61, in diesem Beispiel eine Hochdruckpumpe und einer Zellradschleusen und der Wasserabtrennung 5, zugeführt.

Die Temperatur des Einsatzstoffes wird durch die Zugabe von 200 kg/h Abdampf 45, der teilweise bei der Flashentspannung des Sediments 40 gewonnen wurde, in diesem Beispiel, bis auf über 90°C erhöht. Die Förderfähigkeit des Einsatzstoffes wird hergestellt, indem dieser mit einem Teil des prozessinternem Abwasser 46 (1.040 kg/h), das der mechanischen Entwässerung 47 entnommen wurde, und ein Teil des Kreislaufwassers 48 (7.800 kg/h), das vor der Druckerhöhung in der Zellradschleuse im Wesentlichen wieder vom Einsatzstoff abgetrennt wurde und durch das prozessinterne Abwasser 30 ersetzt wurde, im Anmaischbehälter 3 vermischt wird. Der Feststoffanteil des Einsatzstoffes vor der Zellradschleuse sinkt damit auf unter 10 Masse-%. Das überschüssige Wasser (380 kg/h) wird über 49 aus dem Prozess abgeführt und z.B. einer Aufbereitung oder Nutzung zugeführt. Die Druckerhöhung in der Zellradschleuse wird durch die Zuführung des prozessinternen Abwassers 30 aus der Wasserabtrennung 5, welches über eine Hochdruckpumpe der Zellradschleusen zugeführt wird, unterstützt.

In der Druckerhöhung 61 wird der Druck des Einsatzstoff-Wassergemisches auf 25 bar angehoben und dieses durch im Wesentlichen das im Kreis geführte prozessinterne Abwasser 30 in die Wasserabtrennung 5 gefördert, wo dieses im Wesentlichen wieder vom Einsatzstoff abgetrennt wird und aus der der entwässerte Einsatzstoff der zweiten Prozessstufe zugeführt wird. Die Druckerhöhung kann auch in zwei in Reihe geschalteten Kombinationen aus Hochdruckpumpe und Zellradschleusen erfolgen, falls dies vorteilhaft ist oder zum Erreichen des erforderlichen Drucks notwendig ist.

Der Einsatzstoff wird von oben mit einem Feststoffgehalt von über 30 Masse-% in die zweite Prozessstufe die unter einem Druck von 20 bar arbeitet und in der der Feststoff mitgeführtes Wasser abgibt, eingebracht, dort durch - durch die Kondensation von etwa 420 kg/h Heizdampf 27 - aufgewärmtes Zirkulationswasser 12 auf die für die hydrothermale Karbonisierung erforderliche Temperatur, in diesem Beispiel 220°C, vorgewärmt.

Der Einsatzstoff sinkt bedingt durch die Schwerkraft in das Wasserbad 39 ein, wo er unter einem Druck von 20 bar und maximal Siedetemperatur des Wassers unter Abscheidung von 100 kg/h chemisch gebundenem Wasser und Bildung von 100 kg/h Permanentgasen, wie Kohlendioxid, die über 15 aus dem Prozess abgeführt werden, unter Abgabe von Wärme karbonisiert und sich als Sediment 40 absetzt. Das Wasserbad hat oberhalb der Sedimentschicht in diesem Beispiel einen Feststoffgehalt von unter 5 Massen-%, was eine gute Umwälzbarkeit gewährleistet. An diesem Beispiel wird deutlich, dass das erfindungsgemäße Zulassen des Aufbaus einer Sedimentschicht zu einer erheblichen Aufkonzentration an Feststoff am Sedimentaustrag führt und dadurch ein Großteil des Prozesswassers in der zweiten Prozessstufe gehalten wird.

Das Sediment 40 wird aus der zweiten Prozessstufe über 11 zweistufig, mechanisch und geregelt unter Flashverdampfung eines Teiles des Sedimentwassers 50, 51 ausgetragen, wobei die Flashverdampfung zweistufig erfolgt und Flashdampf in diesem Beispiel als Mitteldruckdampf bei etwa 6 bar (50; 360 kg/h) und als Niederdruckdampf bei etwa 1 bar (51; 270 kg/h) gewonnen wird und der dritten Prozessstufe, bestehend aus einer mechanischen Entwässerung (47) und einer dampfbeheizten Trocknung in Dampfatmosphäre (34) zugeführt.

Das Wärmegleichgewicht der zweiten Prozessstufe wird aufrechterhalten durch die Entnahme von Prozesswasser über eine Entnahmevorrichtung mit Feststoffrückhalt 41 dessen Zirkulation 12, wobei es in einem Wärmetauscher durch Kondensation von Heizdampf 27 erhitzt wird, die Entnahme von Dampf 13 und die Entnahme von Wasser 16.

Die Wasserbilanz der zweiten Prozessstufe wird durch die Entnahme von 80 kg/h Prozesswasser über 16 welches flashentspannt wird und als Wasser 43 (60 kg/h) entweder als zusätzliches Wasser in den Anmaischbehälter (3) eingebracht wird oder aus dem Prozess ausgetragen wird und Sattdampf 42 (20 kg/h), der für eine weitere energetische Nutzung zur Verfügung steht ausgeglichen.

Das über 11 aus der zweiten Prozessstufe in die mechanische Entwässerung (47) geförderte Sediment wird dort mechanisch auf einen Trockenstoffanteil von über 50 Massen-% entwässert, das Filtrat 46 (1.060 kg/h) wird als prozessinternes Abwasser teilweise dem Anmaischbehälter 3 und das Konzentrat, der mechanisch entwässerte, karbonisierte Einsatzstoff 52 (1.600 kg/h), der Trocknung 34 zugeführt wo es indirekt mithilfe dampfbeheizter Flächen 44, unter Bildung von Heizdampfkondensat 28 und etwa 730 kg/h Stattdampf 18, unter geringem Überdruck in einer Dampfatmosphäre getrocknet und mit einem Wassergehalt von 8 Massen-% (800 kg/h Feststoff und 70 kg/h Wasser) über 35 aus dem Prozess ausgetragen wird.

Der in der zweiten Stufe der Sedimententspannung 11 entstehende Flashdampf 51, der bei der Trocknung 34 entstehende Dampf 18 sowie der Flashdampf 42 des aus der zweiten Prozessstufe über 16 entnommenen Wassers werden als Sattdampf gewonnen, können zusammengeführt werden und stehen nach Abzug des Dampfstroms zur Vorwärmung der Einsatzstoffe 45 im Anmaischbehälter 3 als Niederdruckdampf 53 (ca. 1 bar) für eine weitere energetische Nutzung durch direkte Kondensation oder nach Kompression oder Entspannung zur Verfügung.

Weiterhin steht der bei der ersten Stufe der Sedimententspannung 11 entstehende Flashdampf 50 als Mitteldruckdampf (ca. 6 bar) für eine weitere Nutzung durch direkte Kondensation oder nach Kompression oder Entspannung zur Verfügung.

Im Beispiel ist das Endprodukt ein Braunkohlebrennstaub ähnliches Produkt, das über 35 aus dem Prozess mit einem Massestrom von ca. 870 kg/h und einem Wassergehalt von ca. 8 Masse-% und einem Brennwert von 5.376 kW ausgetragen wird.

Der energetische Wirkungsgrad der chemischen Umwandlung beträgt im Beispiel mehr als 95 %.

Das dritte Ausführungsbeispiel zeigt gegenüber dem zweiten Ausführungsbeispiel in Bezug auf die Energie- und Wasserwirtschaft des Prozesses eine ggü. dem zweiten Ausführungsbeispiel weiter verbesserte Verfahrensführung, da die Temperatur des Einsatzstoffs durch die Rückführung von Abwärme in Form von Abdampf aus der Flashentspannung und in Form von Abwasser aus der mechanischen Entwässerung erhöht werden konnte, so dass der spezifische Bedarf an Heizdampf 27 in der zweiten Prozessstufe zurückgeht und gleichzeitig der Heizdampfbedarf 25 in der Trocknung durch die vorgeschaltete mechanische Entwässerung gesenkt wird. Das in der mechanischen Entwässerung abgetrennte Wasser wird vorteilhaft genutzt um die Pumpfähigkeit des Einsatzstoffes herzustellen und das zur Realisierung der zweiten Prozessstufe erforderliche Wasser bereitzustellen, welches nicht wie im ersten Beispiel zusammen mit dem im Vergleich zum ersten Ausführungsbeispiel trockeneren Einsatzstoff in den Prozess eingetragen wird.

Die in diesem Beispiel aus der Anlage auszutragende Wassermenge ergibt sich aus der Summe der Ströme 49 und 43 sowie der Ströme 50 und 53 nach einer direkten oder nach einer Kompression oder Entspannung durchgeführten Kondensation.

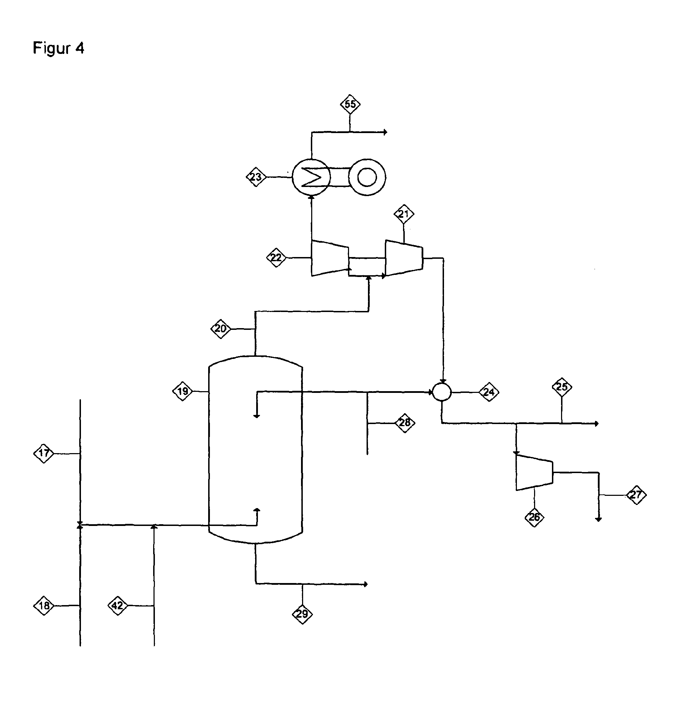

Die erfindungsgemäße Nutzung der Abdampfströme wird mithilfe von Figur 4 an einem vierten Ausführungsbeispiel, welches in Kombination mit dem Ausführungsbeispiel 2 (Figur 2) zu betrachten ist, wie folgt beschrieben:

Die bei der Sedimententspannung 11 und der Entspannung des aus der zweiten Prozessstufe über 16 entnommenen Wassers entstehenden Flashdämpfe 17 und 42 sowie der bei der Trocknung 34 entstehende Dampf 18 werden in der Dampfwäsche 19 isotherm mit dem bei der Trocknung anfallenden Heizdampfkondensat 28 gewaschen.

Der gewaschene Dampf 20 wird im Verdichter 21 auf den für die Realisierung der dritten Prozessstufe erforderlichen Heizdampfdruck komprimiert, durch Einspritzung von Heizdampfkondensat in 24 enthitzt, d.h. im wesentlichen auf Sattdampftemperatur gebracht, und danach den Heizflächen der Trocknung über 25 zugeführt.

Bei bestehendem Heizbedarf in der zweiten Prozessstufe kann erfindungsgemäß in 21 komprimierter Dampf nach der Rückkühlung in 24 einer zweiten Kompressionsstufe 26 zugeführt und dort auf den für die Einspeisung in die zweite Prozessstufe über 27 erforderlichen Druck komprimiert werden.

Für die Beheizung der zweiten und dritten Prozessstufe nicht benötigter Dampf kann erfindungsgemäß in einer Expansion 22 unter Abgabe von technischer Arbeit auf Umgebungstemperaturniveau entspannt und in einer Kondensation 23 verflüssigt werden. Alternativ kann auch eine einfache Kondensation des überschüssigen Dampfes unter Abgabe von Wärme erfolgen.

Das bei 55 anfallende Dampfkondensat und das bei 29 anfallende prozessinterne Abwasser aus der isothermen Dampfwäsche werden entweder falls der Bedarf besteht prozessintern als Kreislaufwasser genutzt oder ggf. nach einer Aufbereitung aus dem Prozess abgeführt.

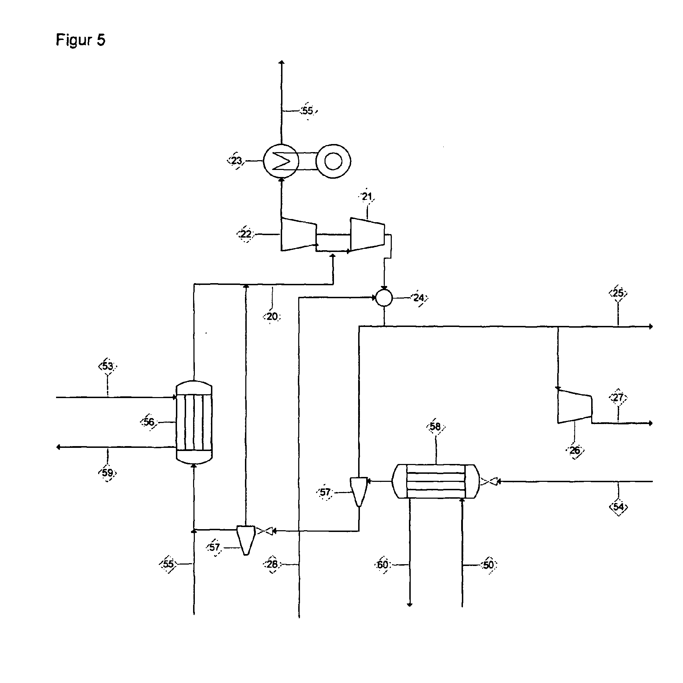

Die erfindungsgemäße Nutzung der Abdampfströme wird mithilfe von Figur 5 an einem fünften Ausführungsbeispiel, welches in Kombination mit dem Ausführungsbeispiel 3 (Figur 3) zu betrachten ist, wie folgt beschrieben:

Der nicht für die regenerative Vorwärmung der Einsatzstoffe erforderliche Niederdruckdampf 53 (ca. 1 bar) wird in einem Niederdruckverdampfer 56 kondensiert. Im Gegenstrom dazu wird das in der Trocknung anfallende Heizdampfkondensat 28 nachdem es flashentspannt und der entstandene Flashdampf im Flüssigkeits-Dampfabscheider 57 abgetrennt wurde, zusammen mit dem Dampfkondensat 55 aus der Expansion 22 verdampft und ergibt zusammen mit dem Flashdampf aus 57 den Niederdruckdampf 20. Dabei ist zu beachten, dass der Niederdruckdampf 20 bedingt durch die im Wärmetauscher erforderliche Temperaturdifferenz bei einem Druck von etwa 0,9 bar erzeugt wird.

Der Niederdruckdampf 20 (ca. 0,8 bar) wird im Verdichter 21 auf den für die Realisierung der dritten Prozessstufe erforderlichen Heizdampfdruck komprimiert, durch Einspritzung von Heizdampfkondensat in 24 enthitzt d.h. im wesentlichen auf Sattdampftemperatur gebracht, und danach zusammen mit Flashdampf aus der Entspannung des Kondensats 54 sowie zusätzlich in 58 erzeugten und in 57 abgetrennten Dampf den Heizflächen der Trocknung über 25 zugeführt.

Bei bestehendem Heizbedarf in der zweiten Prozessstufe kann erfindungsgemäß in 21 komprimierter Dampf nach der Rückkühlung in 24 einer zweiten Kompressionsstufe 26 zugeführt und dort auf den für die Einkopplung in die zweite Prozessstufe über 27 erforderlichen Druck komprimiert werden. Das Kondensat 54 des Heizdampfs 27 wird flashentspannt und in dem Mitteldruckverdampfer 58 durch Kondensation von Mitteldruckflashdampf 50 (ca. 6 bar) teilweise verdampft. Der so gewonnene Dampf, der bedingt durch die im Wärmetauscher erforderliche Temperaturdifferenz bei einem Druck von etwa 5 bar erzeugt wird, wird in dem Flüssigkeits-Dampfabscheider 57 von der Flüssigphase abgetrennt und als Heizdampf zusammen mit dem in 21 komprimierten und in 24 enthitzten Dampf der Trocknung über 28 zugeführt. Die Flüssigphase wird zusammen mit dem Heizdampfkondensat aus der Trocknung 28 vermischt und teilweise zur Rückkühlung von Dampf in 24 und teilweise zur Erzeugung von Niederdruckdampf verwendet.

Für die Beheizung der zweiten und dritten Prozessstufe nicht benötigter Dampf kann erfindungsgemäß in einer Expansion 22 unter Abgabe von technischer Arbeit auf Umgebungstemperaturniveau entspannt und in einer Kondensation 23 verflüssigt. Alternativ kann auch eine einfache Kondensation des überschüssigen Dampfes unter Abgabe von Wärme erfolgen.

Das bei 59 anfallende Niederdruckdampfkondensat und das bei 60 anfallende Mitteldruckdampfkondensat werden entweder falls der Bedarf besteht prozessintern als Kreislaufwasser genutzt oder ggf. nach einer Aufbereitung aus dem Prozess abgeführt.

**Bezugszeichenliste**

| | |
|---|---|
| 1 | Schüttgutsilo |
| 2 | Fördereinrichtung |
| 3 | Aufgabetrichter / Anmaischbehälter |
| 4 | Dickstoffpumpe |
| 5 | Wasserabtrennung |
| 6 | Schüttgutaufgabe |
| 7 | erster Prozessschritt, zweite Prozessstufe |
| 8 | Schüttschicht des Einsatzstoffes |
| 9 | zweiter Prozessschritt, zweite Prozessstufe |
| 10 | dritter Prozessschritt, zweite Prozessstufe |
| 11 | Sedimentaustrag mit Flashentspannung |
| 12 | Zirkulationsprozesswasser aus der zweiten Prozessstufe |
| 13 | Entnahmedampf aus der zweiten Prozessstufe |
| 14 | Dampfzugabe |
| 15 | Permanentgasabfuhr |
| 16 | Prozesswasser aus der zweiten Prozessstufe |
| 17 | Flashdampf aus Sedimententspannung |
| 18 | Dampf aus der Trocknung |
| 19 | isotherme Flashdampfwäsche |
| 20 | Niederdruckdampf vor Verdichter I |
| 21 | Verdichter I |
| 22 | Expansion |
| 23 | Kondensation |
| 24 | Rückkühler Dampf |
| 25 | Heizdampf Trocknung |
| 26 | Verdichter II |
| 27 | Heizdampf zur Beheizung der zweiten Prozessstufe |
| 28 | Heizdampfkondensat aus der Trocknung |
| 29 | prozessinternes Abwasser aus der Dampfwäsche |
| 30 | prozessinternes Abwasser aus der Wasserabtrennung |
| 31 | Brüden aus Eindickung |
| 32 | Dünger |
| 33 | Prozesswassereindickung |
| 34 | Trockner in Dampfatmosphäre |
| 35 | Produktaustrag |
| 36 | Heizdampfkondensat für die isotherme Wäsche |
| 37 | Einsatzstoff vor der ersten Prozessstufe |
| 38 | Druckschleuse |
| 39 | Wasserbad in der zweiten Prozessstufe |
| 40 | Sediment in der zweiten Prozessstufe |
| 41 | Entnahmevorrichtung mit Feststoffrückhalt |
| 42 | Flashdampf aus der Entspannung von Prozesswasser |
| 43 | Entspanntes Prozesswasser |
| 44 | Dampfbeheizte Flächen |
| 45 | Abdampf zur Vorwärmung |
| 46 | Prozessinternes Abwasser aus mechanischer Entwässerung |
| 47 | mechanische Entwässerung |
| 48 | Kreislaufwasser zu Einsatzstoffförderung |
| 49 | Ausgetragenes Prozesswasser |
| 50 | Flashdampf Mitteldruck aus Sedimententspannung |
| 51 | Flashdampf Niederdruck aus Sedimententspannung |
| 52 | karbonisierter Einsatzstoff nach mechanischer Entwässerung |
| 53 | Niederdruckdampf |
| 54 | Heizdampfkondensat aus der zweiten Prozessstufe |
| 55 | Dampfkondensat Expansion |
| 56 | Wärmetauscher / Niederdruckverdampfer |
| 57 | Flüssigkeits-Dampfabscheider |
| 58 | Wärmetauscher / Mitteldruckverdampfer |
| 59 | Niederdruckdampfkondensat |
| 60 | Mitteldruckdampfkondensat |
| 61 | Hochdruckpumpe und Zellradschleuse |

## Patentansprüche

1. Kontinuierliches Verfahren zur hydrothermalen Karbonisierung von Biomasse, **dadurch gekennzeichnet, dass**
• in einer ersten Prozessstufe, der Druckerhöhung, der Druck des Einsatzstoffes im wesentlichen auf den Druck der nachfolgenden Prozessstufe von wenigstens 5 bar erhöht wird,
• der Einsatzstoff in einer zweiten Prozessstufe, der Karbonisierung, unter Abspaltung von im wesentlichen Wasser und Kohlenstoffdioxid bei einem Druck von mindestens 5 bar und maximal Siedetemperatur des Wassers in ein karbonisiertes Produkt umgewandelt wird,
• der Einsatzstoff in der zweiten Prozessstufe vor allem durch Schwerkraft im wesentlichen vertikal transportiert wird,
• der Einsatzstoff im oberen Bereich der zweiten Prozessstufe durch Entnahme und teilweise wieder Zuführung von Wasser aus der bzw. in die zweite Prozessstufe umgewälzt wird,
• der Einsatzstoff sich im unteren Teil der zweiten Prozessstufe als wasserhaltiges Sediment absetzt,
• die Mindesthöhe des Sediments so gewählt wird, dass sich der Feststoffgehalt durch Sedimentation auf mindestens 15%, bevorzugt mindestens 20% weiter bevorzugt mindestens 25%, besonders bevorzugt mindestens 30% erhöht und die Maximalhöhe der Sedimentschicht so begrenzt wird, dass sich durch den statischen Druck kein fester Bodenkörper ausbildet,
• die Füllhöhe des Wasserstandes in der zweiten Prozessstufe geregelt wird durch die Entnahme und Zuführung von Wasser in die Prozessstufe,
• die in der zweiten Prozessstufe anfallenden Permanentgase im Gegenstrom zu dem in die zweite Prozessstufe eintretendem Einsatzstoff aus der zweiten Prozessstufe in der Art abgeführt werden, dass der enthaltene Wasserdampfanteil zumindest teilweise an dem im Verhältnis kälteren Einsatzstoff kondensiert und die Permanentgase erst danach aus dem Prozess abgeführt werden und
• das Sediment aus der zweiten Prozessstufe ausgetragen und durch Verdampfung von Wasser auf im wesentlichen das Temperatumiveau einer dritten Prozessstufe, einer mit Dampf beheizten Trocknung, bei der die Trocknung in Dampfatmosphäre erfolgt, abgekühlt und dieser zugeführt und aus dieser als Endprodukt in Form von marktfähiger Kohle mit Wassergehalten von kleiner 30, bevorzugt kleiner 20, insbesondere kleiner 15 Masse-% ausgetragen wird.

2. Verfahren nach Anspruch 1, **dadurch gekennzeichnet, dass** die Temperatur des Einsatzstoffs in der ersten Prozessstufe durch dessen Vermischung mit im Verhältnis zur Temperatur des Einsatzstoffs heißerem Abwasser und Abdampf aus den nachfolgenden Prozessstufen erhöht wird und vor dem Eintrag des Einsatzstoffes in die zweite Prozessstufe maximal soviel Wasser wieder vom Einsatzstoff abgetrennt wird, wie zuvor zugeführt wurde und von dem abgetrennten Wasser maximal soviel Wasser aus dem Prozess abgeführt wird, wie in den nachfolgenden Prozessstufen der Karbonisierung und Trocknung vom Einsatzstoff abgetrennt wurde und darüber hinaus in die erste Prozessstufe zugeführtes Wasser als Kreislaufwasser im Prozess verbleibt.

3. Verfahren nach einem der vorherigen Ansprüche **dadurch gekennzeichnet, dass** in der ersten Prozessstufe die Druckerhöhung des Einsatzstoffes in Gegenwart einer Flüssigkeit erfolgt und unmittelbar vor der Druckerhöhung die Förderfähigkeit des Einsatzstoffes durch Auffüllen mindestens seine Lückenvolumen mit prozessinternem Abwasser hergestellt wird und vor dem Eintrag des Einsatzstoffes in die zweite Prozessstufe maximal soviel Wasser wieder vom Einsatzstoff abgetrennt wird, wie zuvor zugeführt wurde.

4. Verfahren nach einem der vorherigen Ansprüche **dadurch gekennzeichnet, dass** im eiten Prozessschritt der zweiten Prozessstufe, der Karbonisierung, ein annähernd isothermer Prozessablauf durch Dampfentnahme, der Wiederzuführung des für die Umwälzung entnommenen Wassers und erforderlichenfalls durch Zugabe von externem Heizdampf, der in der Prozessstufe kondensiert, erhalten wird.

5. Verfahren nach einem der vorherigen Ansprüche **dadurch gekennzeichnet, dass** im zweiten Prozessschritt der zweiten Prozessstufe, der Karbonisierung, ein annähernd isothermer Prozessablauf durch Dampfentnahme und der Entnahme Aufwärmung und Wiederzuführung des für die Umwälzung entnommenen Wassers erhalten wird.

6. Verfahren nach einem der vorherigen Ansprüche **dadurch gekennzeichnet, dass** der mit Dampf beheizten Trocknung der dritten Prozessstufe eine mechanisch Entwässerung vorgeschaltet ist, wobei nur das bei der mechanischen Entwässerung anfallende Konzentrat in die mit Dampf beheizte Trocknung eingebracht wird.

7. Verfahren nach einem der vorherigen Ansprüche **dadurch gekennzeichnet, dass** der Flashdampf aus der Drucksenkung des der zweiten Prozessstufe nicht wieder zugeführten Wassers und des wasserhaltigen Sediments sowie der bei der Trocknung entstehende Dampf isotherm gewaschen und danach komprimiert oder in einem Kraftprozess unter Abgabe von technischer Arbeit entspannt werden, wobei die Druckstufen der Kompression bestimmt werden von dem für die Beheizung des Trockners und für die Beheizung der zweiten Prozessstufe erforderlichen Druckes.

8. Verfahren nach einem der vorherigen Ansprüche **dadurch gekennzeichnet, dass** der Flashdampf aus der Drucksenkung des der zweiten Prozessstufe nicht wieder zugeführten Wassers und des wasserhaltigen Sediments sowie der bei der Trocknung entstehende Dampf zur Erzeugung von Frischdampf kondensiert werden welcher danach komprimiert oder in einem Kraftprozess unter Abgabe von technischer Arbeit entspannt wird, wobei die Druckstufen der Kompression bestimmt werden von dem für die Beheizung des Trockners und für die Beheizung der zweiten Prozessstufe erforderlichen Druckes.

9. Verfahren nach einem der vorherigen Ansprüche **dadurch gekennzeichnet, dass** das in der isothermen Wäsche der Flash- und Trocknungsdämpfe anfallende Wasser dem Einsatzstoff in der ersten Prozessstufe vor der Druckerhöhung zugeführt und nach Abgabe eines Teiles seiner fühlbaren Wärme an den Einsatzstoff zumindest teilweise vor der zweiten Prozessstufe wieder von diesem abgetrennt und danach einer Verwertung zugeführt wird.

10. Verfahren nach Anspruch 9 **dadurch gekennzeichnet, dass** der Verwertung eine Aufkonzentration durch Verdunstung oder Eindampfung vorgeschaltet ist.

11. Verfahren nach einem der vorherigen Ansprüche **dadurch gekennzeichnet, dass** das in der mechanischen Entwässerung anfallende Filtrat dem Einsatzstoff in der ersten Prozessstufe vor der Druckerhöhung zugeführt und nach Abgabe eines Teiles seiner fühlbaren Wärme an den Einsatzstoff zumindest teilweise vor der zweiten Prozessstufe wieder abgeführt und danach einer Verwertung zugeführt wird.

12. Verfahren nach Anspruch 11, **dadurch gekennzeichnet, dass** der Verwertung eine Aufkonzentration durch Verdunstung oder Eindampfung vorgeschaltet ist.

13. Verfahren nach einem der vorherigen Ansprüche **dadurch gekennzeichnet, dass** das in den Verdampfer anfallende Kondensat dem Einsatzstoff in der ersten Prozessstufe vor der Druckerhöhung zugeführt und nach Abgabe eines Teiles seiner fühlbaren Wärme zumindest teilweise vor der zweiten Prozessstufe wieder abgeführt und danach einer Verwertung zugeführt wird.

14. Verfahren nach Anspruch 13, **dadurch gekennzeichnet, dass** der Verwertung eine Aufkonzentration durch Verdunstung oder Eindampfung vorgeschaltet ist.

## Claims

1. A continuous method for the hydrothermal carbonization of biomass, **characterized in that**
• in a first processing stage, the pressure increase, the pressure of the feedstock is increased essentially to the pressure of the following processing stage of at least 5 bar,
• the feedstock is converted into a carbonized product in a second processing stage, the carbonization, with cleavage of essentially water and carbon dioxide at a pressure of at least 5 bar and at most boiling temperature of the water,
• the feedstock is essentially vertically transported primarily by gravity in the second processing stage,
• the feedstock is circulated in the upper area of the second processing stage by removal and partial resupply of water from or into, respectively, the second processing stage,
• the feedstock settles in the lower part of the second processing stage as a water-containing sediment,
• the minimum height of the sediment is selected so that the solid content is increased by sedimentation to at least 15 %, preferably at least 20 %, more preferably at least 25 %, particularly preferably at least 30 %, and the maximum height of the sediment layer is limited so that a solid bottoms fraction does not form due to the static pressure,
• the filling height of the water level in the second processing stage is regulated by the removal and supply of water in the processing stage,
• the permanent gases arising in the second processing stage are discharged from the second processing stage in counterflow from the feedstock entering the second processing stage in such a way that the included steam fraction at least partially condenses on the feedstock, which is colder in relation thereto, and the permanent gases are only then discharged from the process, and
• the sediment is delivered from the second processing stage and cooled by vaporization of water to essentially the temperature level of a third processing stage, drying heated by steam, in which the drying is performed in steam atmosphere, and supplied thereto and is delivered therefrom as the final product in the form of marketable coal having water contents of less than 30, preferably less than 20, in particular less than 15 mass-%.

2. Method according to Claim 1, **characterized in that** the temperature of the feedstock in the first processing stage is increased by the mixture thereof with waste water and waste steam from the following processing stages, which is hotter in relation to the temperature of the feedstock, and at most as much water is separated again from the feedstock before the introduction of the feedstock into the second processing stage as was previously supplied, and of the separated water, at most as much water is discharged from the process as would be separated from the feedstock in the following processing stages of carbonization and drying, and, in addition, water supplied in the first processing stage remains as circulating water in the process.

3. Method according to one of the preceding claims, **characterized in that**, in the first processing stage, the pressure increase of the feedstock is performed in the presence of a liquid and, immediately before the pressure increase, the ability to convey the feedstock is produced by filling up at least its gap volume with process-internal wastewater and, before the introduction of the feedstock into the second processing stage, at most as much water is separated from the feedstock again as was previously supplied.

4. Method according to one of the preceding claims, **characterized in that**, in a second processing step of the second processing stage, the carbonization, an approximately isothermal process sequence is obtained by steam removal, the resupply of the water removed for the circulation, and if necessary by adding external hot steam which condenses in the processing stage.

5. Method according to one of the preceding claims, **characterized in that**, in a second processing step of the second processing stage, the carbonization, an approximately isothermal process sequence is obtained by steam removal and the removal, heating, and resupply of the water removed for the circulation.

6. Method according to one of the preceding claims, **characterized in that** mechanical drainage is connected upstream from the drying of the third processing stage, which is heated using steam, only the concentrate arising during the mechanical drainage being introduced into the drying heated using steam.

7. Method according to one of the preceding claims, **characterized in that** the flash steam from the pressure reduction of the water which is not resupplied to the second processing stage and of the water-containing sediment, as well as the steam arising during the drying are isothermally washed and then compressed or relaxed in a force process while releasing technical work, the pressure stages of the compression being determined by the pressure required for heating the dryer and for heating the second processing stage.

8. Method according to one of the preceding claims, **characterized in that** the flash steam from the pressure reduction of the water which is not resupplied to the second processing stage and of the water-containing sediment, as well as the steam arising during the drying are condensed to generate live steam, which is then compressed or relaxed in a force process while releasing technical work, the pressure stages of the compression being determined by the pressure required for heating the dryer and for heating the second processing stage.

9. Method according to one of the preceding claims, **characterized in that** the water arising in the isothermal washing of the flash steam and drying steam is supplied to the feedstock in the first processing stage before the pressure increase and, after releasing a part of its perceptible heat to the feedstock, is at least partially separated therefrom again before the second processing stage and then supplied to a utilization.

10. Method according to claim 9, **characterized in that** a concentration by evaporation or inspissation is connected upstream from the utilization.

11. Method according to one of the preceding claims, **characterized in that** the filtrate arising in the mechanical drainage is supplied to the feedstock in the first processing stage before the pressure increase and, after releasing a part of its perceptible heat to the feedstock, is at least partially discharged again before the second processing stage and then supplied to a utilization.

12. Method according to claim 11, **characterized in that** a concentration by evaporation or inspissation is connected upstream from the utilization.

13. Method according to one of the preceding claims, **characterized in that** the condensate arising in the vaporizer is supplied to the feedstock in the first processing stage before the pressure increase and, after releasing a part of its perceptible heat, is at least partially discharged again before the second processing stage and then supplied to a utilization.

14. Method according to claim 13, **characterized in that** a concentration by evaporation or inspissation is connected upstream from the utilization.

## Revendications

1. Procédé continu de carbonisation hydrothermale de biomasse, **caractérisé en ce que**
• dans une première phase du processus, dite d'augmentation de la pression, la pression de la matière utilisée est portée essentiellement à la pression de la phase suivante du processus d'au moins 5 bars,
• dans une deuxième phase du processus, dite de carbonisation, la matière est transformée en un produit carbonisé à une pression d'au moins 5 bars et au maximum à la température d'ébullition, en séparant essentiellement l'eau et le dioxyde de carbone,
• dans la deuxième phase du processus, la matière est transportée essentiellement verticalement, surtout par gravité,
• dans la partie supérieure de la deuxième phase du processus, la matière est mise en circulation par extraction et, pour une partie, ajout d'eau respectivement hors ou dans la deuxième phase du processus,
• dans la partie inférieure de la deuxième phase du processus, la matière se dépose sous forme de sédiment aqueux,
• la hauteur minimale du sédiment est choisie de façon à porter la teneur en matières solides par sédimentation à au moins 15 %, de préférence à au moins 20 %, de préférence encore à au moins 25 %, de manière particulièrement préférée à au moins 30%, et la hauteur maximale de la couche sédimentaire est limitée de façon à éviter la formation d'un dépôt solide par la pression statique,
• dans la deuxième phase du processus, le niveau d'eau est ajusté par extraction et introduction d'eau dans la phase du processus,
• les gaz permanents produits dans la deuxième phase du processus sont évacués de la deuxième phase à contre-courant par rapport à la matière entrant dans la deuxième phase de sorte que la part de vapeur d'eau contenue dans les gaz condense au moins partiellement sur la matière relativement plus froide et que les gaz permanents soient évacués du processus seulement après, et
• le sédiment est évacué de la deuxième phase du processus et refroidi par évaporation d'eau essentiellement jusqu'au niveau de température d'une troisième phase du processus, un séchage avec chauffage à la vapeur, dans laquelle le séchage a lieu dans une atmosphère de vapeur, puis il est envoyé dans la troisième phase du processus pour en sortir en tant que produit fini sous forme de charbon commercialisable avec des teneurs en eau inférieures à 30, de préférence inférieures à 20, en particulier inférieures à 15 % en poids.

2. Procédé selon la revendication 1, **caractérisé en ce que** dans la première phase du processus, on augmente la température de la matière en mélangeant celle-ci aux eaux usées et à la vapeur d'échappement issues des phases suivantes du processus et dont la température est supérieure à celle de la matière, et avant d'introduire la matière dans la deuxième phase du processus, on sépare de la matière à nouveau au maximum la quantité d'eau apportée précédemment et de cette quantité d'eau séparée on évacue du processus au maximum la quantité d'eau qui a été séparée de la matière dans les phases suivantes du processus, à savoir la carbonisation et le séchage, étant précisé que l'eau envoyée dans la première phase du processus reste dans le processus comme eau de recyclage.

3. Procédé selon l'une des revendications précédentes, **caractérisé en ce que** dans la première phase du processus, l'augmentation de pression de la matière a lieu en présence d'un liquide, et immédiatement avant l'augmentation de la pression, on assure le transport de la matière en remplissant au moins ses volumes de vides avec les eaux usées de processus, et avant d'introduire la matière dans la deuxième phase du processus, on sépare de la matière à nouveau au maximum la quantité d'eau apportée précédemment.

4. Procédé selon l'une des revendications précédentes, **caractérisé en ce que** dans la deuxième étape de la deuxième phase du processus, à savoir la carbonisation, on obtient un déroulement sensiblement isotherme du processus par extraction de vapeur, la réintroduction de l'eau extraite pour la mise en circulation et, au besoin, par addition de vapeur de chauffage externe qui condense dans cette phase du processus.

5. Procédé selon l'une des revendications précédentes, **caractérisé en ce que** dans la deuxième étape de la deuxième phase du processus, à savoir la carbonisation, on obtient un déroulement sensiblement isotherme du processus par extraction de vapeur et l'extraction, le réchauffage et la réintroduction de l'eau extraite pour la mise en circulation.

6. Procédé selon l'une des revendications précédentes, **caractérisé en ce que** le séchage avec chauffage à la vapeur de la troisième phase du processus est précédé d'une déshydratation mécanique, étant précisé que seul le concentré résultant de la déshydratation mécanique est envoyé au séchage avec chauffage à la vapeur.

7. Procédé selon l'une des revendications précédentes, **caractérisé en ce que** la vapeur instantanée issue de la baisse de pression de l'eau non recyclée dans la deuxième phase du processus et du sédiment aqueux ainsi que la vapeur formée lors du séchage sont lavées dans des conditions isothermes et ensuite comprimées ou détendues dans un processus de force en fournissant du travail technique, les paliers de pression de la compression étant déterminés par la pression requise pour le chauffage du dispositif de séchage et pour le chauffage de la deuxième phase du processus.

8. Procédé selon l'une des revendications précédentes, **caractérisé en ce que** la vapeur instantanée issue de la baisse de pression de l'eau non recyclée dans la deuxième phase du processus et du sédiment aqueux ainsi que la vapeur formée lors du séchage sont condensées pour produire de la vapeur fraîche, laquelle est ensuite comprimée ou détendue dans un processus de force en fournissant du travail technique, les paliers de pression de la compression étant déterminés par la pression requise pour le chauffage du dispositif de séchage et pour le chauffage de la deuxième phase du processus.

9. Procédé selon l'une des revendications précédentes, **caractérisé en ce que** l'eau produite lors du lavage isotherme des vapeurs instantanées et de séchage est amenée à la matière dans la première phase du processus avant l'augmentation de la pression, et après avoir transmis une partie de sa chaleur sensible à la matière, elle est à nouveau séparée de celle-ci au moins partiellement avant la deuxième phase du processus puis recyclée.

10. Procédé selon la revendication 9, **caractérisé en ce que** le recyclage est précédé d'une concentration par évaporation ou vaporisation.

11. Procédé selon l'une des revendications précédentes, **caractérisé en ce que** le filtrat résultant de la déshydratation mécanique est amené à la matière dans la première phase du processus avant l'augmentation de la pression, et après avoir transmis une partie de sa chaleur sensible à la matière, il est à nouveau évacué au moins partiellement avant la deuxième phase du processus puis recyclé.

12. Procédé selon la revendication 11, **caractérisé en ce que** le recyclage est précédé d'une concentration par évaporation ou vaporisation.

13. Procédé selon l'une des revendications précédentes, **caractérisé en ce que** le condensat formé dans l'évaporateur est amené à la matière dans la première phase du processus avant l'augmentation de la pression, et après avoir transmis une partie de sa chaleur sensible à la matière, il est à nouveau évacué au moins partiellement avant la deuxième phase du processus puis recyclé.

14. Procédé selon la revendication .13, **caractérisé en ce que** le recyclage est précédé d'une concentration par évaporation ou vaporisation.
